# EUROPEAN PATENT APPLICATION

(11) **EP 4 378 979 A1**
(43) Date of publication of application: **05.06.2024**
(21) Application number: 22849546.1
(22) Date of filing: 27.07.2022
(51) Int. Cl.: C08J 3/14, C03C 27/12, C08J 9/28

(54) **IONOMER RESIN PARTICULATE PRODUCTION METHOD**

(30) Priority: 28.07.2021 JP 2021123194
(71) Applicant: Kuraray Europe GmbH, 65795 Hattersheim am Main (DE)
(72) Inventor: KUDO, Yusuke, Tsukuba-shi, Ibaraki 305-0841 (JP); TAKEMOTO, Kenta, Tsukuba-shi, Ibaraki 305-0841 (JP); NIIMURA, Takuro, Tsukuba-shi, Ibaraki 305-0841 (JP); NAKAHARA, Atsuhiro, Tsukuba-shi, Ibaraki 305-0841 (JP)
(74) Representative: Müller-Boré & Partner Patentanwälte PartG mbB
(86) International application number: PCT/JP2022/028951
(87) International publication number: WO 2023/008485

(57) **Abstract**

The present invention relates to a method of producing an ionomer resin particulate, comprising a step of extruding a mixture comprising a crude ionomer resin and a solvent, cooling the extruded mixture, and solidifying the crude ionomer resin in the mixture to obtain a porous particulate, wherein the crude ionomer resin comprises a (meth)acrylic acid unit (A), a neutralized (meth)acrylic acid unit (B) and an ethylene unit (C), a total amount of the unit (A) and the unit (B) is 6 to 10mol% based on all monomeric units constituting the crude ionomer resin, and a porosity of the particulate is 60% or more.

## Description

### TECHNICAL FIELD

The present patent application claims Paris Convention priority based on Japanese Patent Application No. 2021-123194 (filing date: July 28, 2021), which is incorporated herein by reference in its entirety.

The present invention relates to a method of producing an ionomer resin particulate, a porous ionomer resin particulate, a resin sheet including one or more layers containing the ionomer resin particulate as a resin component, a laminated glass interlayer comprising the resin sheet, and a laminated glass having the laminated glass interlayer.

### BACKGROUND ART

One known method of producing ionomer resins includes a step of saponifying a copolymer, which is an ethylene-(meth)acrylic acid ester copolymer used as a raw material (hereinafter, also referred to as "EMMA saponification method") (e.g., Patent Documents 1 to 3). An advantage of this method is that it does not require corrosion-resistant facilities in contrast to other methods of producing ionomer resins comprising a step of copolymerizing ethylene and (meth)acrylic acid (e.g., Patent Document 4), which require corrosion-resistant facilities. Furthermore, the EMMA saponification method can be used to produce ionomer resins with various copolymerization compositions.

### PRIOR ART DOCUMENT

### PATENT DOCUMENTS

Patent Document 1: JP-A-60-240704
Patent Document 2: JP-B-5554477
Patent Document 3: JP-A-63-270709
Patent Document 4: US 8,399,096

### SUMMARY OF THE INVENTION

### PROBLEMS TO BE SOLVED BY THE INVENTION

However, investigations by the present inventors have demonstrated that involvement of saponification reactions with alkalis and demetalation reactions with acids in the EMMA saponification method results in production of salts through neutralization reactions between the alkalis and the acids, which produced salts may cause deterioration of the transparency of the ionomer resin, especially the transparency when the ionomer resin has absorbed water.

Thus, the present inventors attempted to remove the salts produced via the reactions from the ionomer resin by a method of precipitating the ionomer resin by adding a poor solvent to the reaction solution resulting via the saponification reactions and the demetalation reactions (this method is hereinafter also referred to as "reprecipitation method"). However, in the reprecipitation method, the salts may not be sufficiently removed, and the resulting ionomer resin is in the form of powder, so that it has been difficult to handle the ionomer resin. The present inventors also studied a method of obtaining a granular ionomer resin from a reaction solution resulting via the saponification reactions and the demetalation reactions in order to improve the handleability of the obtained ionomer resin, but it has been found that it is difficult to sufficiently remove salts from the obtained particulate.

Thus, an object of the present invention is to provide a method of producing an ionomer resin particulate superior in transparency and handleability by improving the removability of salts produced in an EMMA saponification method.

### SOLUTIONS TO THE PROBLEMS

As a result of intensive studies to solve the above problems, the present inventors have reached the present invention. Accordingly, the present invention provides the following aspects.
[1] A method of producing an ionomer resin particulate, comprising a step of extruding a mixture comprising a crude ionomer resin and a solvent, cooling the extruded mixture, and solidifying the crude ionomer resin in the mixture to obtain a porous particulate, wherein the crude ionomer resin comprises a (meth)acrylic acid unit (A), a neutralized (meth)acrylic acid unit (B) and an ethylene unit (C), a total amount of the unit (A) and the unit (B) is 6 to 10mol% based on all monomeric units constituting the crude ionomer resin, and a porosity of the particulate is 60% or more.
[2] The method according to [1], wherein the cooling of the extruded mixture is performed by bringing the extruded mixture into contact with a poor solvent.
[3] The method according to [1] or [2], wherein pores of the particulate has a median diameter of 0.05 to 1.2 µm.
[4] The method according to any one of [1] to [3], wherein the particulate is a pellet having a size of 1 to 8 mm.
[5] The method according to any one of [1] to [4], wherein the crude ionomer resin further comprises a (meth)acrylic acid ester unit (D); and wherein a total amount of the unit (A), the unit (B) and the unit (D) is from 6 to 10mol% based on all monomeric units constituting the crude ionomer resin.
[6] The method according to any one of [2] to [5], wherein the poor solvent is water, an alcohol, or a mixed solvent thereof.
[7] The method according to any one of [1] to [6], the method further comprising a step of washing the obtained porous particulate with a washing liquid.
[8] The method of producing an ionomer resin according to [7], wherein the washing liquid is water, an alcohol, or a mixed solution thereof.
[9] The method according to any one of [1] to [8], wherein the amount of a salt of a strong acid and a strong base in the ionomer resin particulate is 1000 mg/kg or less.
[10] The method according to any one of [1] to [9], wherein an ethylene-(meth)acrylic acid ester copolymer (X) is used as a raw material.
[11] A porous ionomer resin particulate having a porosity of 60% or more.
[12] The porous ionomer resin particulate according to [11], wherein the particulate is a pellet having a size of 1 to 8 mm.
[13] The porous ionomer resin particulate according to [11] or [12], wherein pores of the particulate have a median diameter of 0.05 to 1.2 µm.
[14] The porous ionomer resin particulate according to any one of [11] to [13], wherein an amount of a salt of a strong acid and a strong base is 1000 mg/kg or less.
[15] A resin sheet comprising one or more layers containing the porous ionomer resin particulate according to any one of [11] to [14] as a resin component.
[16] A laminated glass interlayer comprising the resin sheet according to [15].
[17] A laminated glass comprising two glass plates, and the laminated glass interlayer according to [16], positioned between the two glass plates.

### EFFECTS OF THE INVENTION

The present invention can improve the removability of salts produced in an EMMA saponification method and thereby provide a method of producing an ionomer resin particulate superior in transparency and handleability.

### BRIEF DESCRIPTION OF THE DRAWINGS

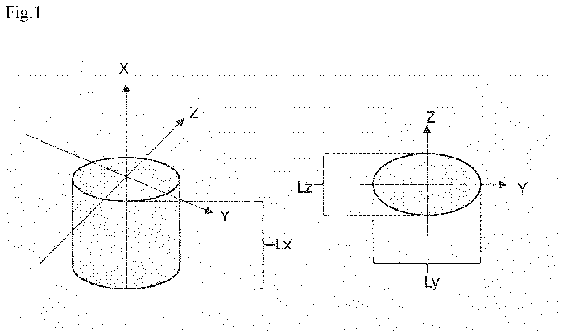

Fig. 1 is a conceptual diagram illustrating the length (Lx) of the X-axis, the length (Ly) of the Y-axis, and the length (Lz) of the Z-axis of a pellet to be used for calculation of a pellet size, and the right diagram in Fig. 1 is a plan view of the pellet illustrated in the left diagram in Fig. 1 viewed from the X-axis direction.

### DETAILED DESCRIPTION

Hereinafter, embodiments of the present invention will be described in detail. The scope of the present invention is not limited to the embodiments described herein, and various modifications can be made without departing from the spirit of the present invention.

### [Method of producing ionomer resin particulate]

The method of producing an ionomer resin particulate of the present invention comprises a step of extruding a mixture comprising a crude ionomer resin and a solvent, cooling the extruded mixture, and solidifying the crude ionomer resin in the mixture to obtain a porous particulate (this step is hereinafter also referred to as "step (I)"), wherein the crude ionomer resin comprises a (meth)acrylic acid unit (A), a neutralized (meth)acrylic acid unit (B), and an ethylene unit (C), a total amount of the unit (A) and the unit (B) is 6 to 10mol% based on all monomeric units constituting the crude ionomer resin, and a porosity of the particulate is 60% or more.

The present inventors studied a method for removing salts generated via saponification reactions and demetalation reactions from the crude ionomer resin produced by an EMMA saponification method, and found that when the crude ionomer resin is in the form of a porous body, the salts can be removed not only from the resin surface but also from the inside of the resin through pores, so that the removability of the salts can be improved. Then, as a result of further studies focusing on the relationship between the porosity of a porous body and the removability of salts, the present inventors have found that when a crude ionomer resin is in the form of a porous particulate having a porosity of 60% or more, salts in the resin can be sufficiently removed, and an ionomer resin particulate superior in transparency and handleability is obtained. Therefore, when an ionomer resin particulate is produced by the method including the step (I), salts in the resin are easily removed, and an ionomer resin particulate superior in transparency and handleability can be obtained. The present inventors have also found that the method of the present invention can reduce the amount of solvent used as compared with the reprecipitation method.

### <Step (I)>

Step (I) is a step of extruding a mixture containing a crude ionomer resin and a solvent, cooling the extruded mixture, and solidifying the crude ionomer resin in the mixture to obtain a porous particulate having a porosity of 60% or more.

### (Crude Ionomer Resin)

The crude ionomer resin in the step (I) comprises a (meth)acrylic acid unit (A), a neutralized (meth)acrylic acid unit (B), and an ethylene unit (C), wherein the total amount of the unit (A) and the unit (B) is from 6 to 10mol% based on all monomeric units constituting the crude ionomer resin.

As used herein, the term "unit" means "-derived constitutional unit". For example, the term "(meth)acrylic acid unit" represents a (meth)acrylic acid-derived constitutional unit; the term "neutralized (meth)acrylic acid unit" represents a neutralized (meth)acrylic acid-derived constitutional unit; and the term "ethylene unit" represents an ethylene-derived constitutional unit. As used herein, the term "(meth)acrylic acid" represents methacrylic acid or acrylic acid.

When the total amount is more than the upper limit value, the increase in the melt viscosity of the ionomer resin particulate during the molding process is unlikely to be reduced, and thus the molding processability of the ionomer resin particulate is likely to be deteriorated. When the total amount is less than the lower limit value, the transparency of the resulting ionomer resin particulate, especially when the crystallization of the ionomer resin is facilitated by slow cooling (hereinafter, also referred to as "transparency after slow cooling"), is likely to be deteriorated. The total amount is 6mol% or more, preferably 6.5mol% or more, more preferably 7.0mol% or more, and still more preferably 7.5mol% or more from the viewpoint that the transparency (especially, transparency after slow cooling) of the ionomer resin particulate and the adhesiveness to substrates such as glass are likely to be improved, and is 10mol% or less, preferably 9.9mol% or less, and more preferably 9.5mol% or less from the viewpoint that the molding processability is likely to be improved.

The total amount of the unit (A) and the unit (B) can be adjusted according to the method of producing a crude ionomer resin as described later. More specifically, the adjustment can be made by the reactivity (conversion rate) of the reactions to convert (meth)acrylic acid ester units in the ethylene-(meth)acrylic acid ester copolymer that is a raw material of the crude ionomer resin into the (meth)acrylic acid unit (A) and the neutralized (meth)acrylic acid unit (B) via the saponification reaction and demetalation reaction.

Examples of the monomer constituting the (meth)acrylic acid unit (A) include acrylic acid and methacrylic acid, and methacrylic acid is preferable from the viewpoint of heat resistance and adhesiveness to substrates. These (meth)acrylic acid units may be used alone or in combination of the two types.

The amount of the (meth)acrylic acid unit (A) in the crude ionomer resin is not particularly limited as long as the total amount of the unit (A) and the unit (B) is within the range from 6 to 10mol% based on all monomeric units constituting the crude ionomer resin. In one embodiment of the present invention, the amount of the (meth)acrylic acid unit (A) in the crude ionomer resin is preferably 4.5mol% or more, more preferably 5.0mol% or more, still more preferably 5.5mol% or more, and particularly preferably 5.8mol% or more, and is preferably 9.0mol% or less, more preferably 8.5mol% or less, still more preferably 8.0mol% or less, and particularly preferably 7.5mol% or less, based on all monomeric units constituting the crude ionomer resin. When the amount of the unit (A) is the lower limit value or more, the transparency and the adhesiveness to substrates of the ionomer resin particulate are likely to be improved. When the amount is the upper limit value or less, the molding processability is likely to be improved.

Preferably, the neutralized (meth)acrylic acid unit (B) is a neutralized unit of the (meth)acrylic acid unit (A). The neutralized (meth)acrylic acid is obtained by substituting the hydrogen ion in the (meth)acrylic acid with a metal ion. Examples of the metal ion include monovalent metal ions such as lithium, sodium, and potassium, and multivalent metal ions such as magnesium, calcium, zinc, aluminum, and titanium. These metal ions may be used alone or in combination of two or more. For example, one or more monovalent metal ion and one or more divalent metal ion may be combined.

The amount of the neutralized (meth)acrylic acid unit (B) in the crude ionomer resin is not particularly limited as long as the total amount of the unit (A) and the unit (B) is within the range from 6 to 10mol% based on all monomeric units constituting the crude ionomer resin. In one embodiment of the present invention, the amount of the neutralized (meth)acrylic acid unit (B) is preferably 0.65mol% or more, more preferably 1.0mol% or more, still more preferably 1.5mol% or more, and particularly preferably 1.7mol% or more, and is preferably 3.0mol% or less, more preferably 2.7mol% or less, still more preferably 2.6mol% or less, and particularly preferably 2.5mol% or less, based on all monomeric units constituting the crude ionomer resin. When the amount of the unit (B) is the lower limit value or more, the transparency and the elastic modulus are likely to be improved. When the amount is the upper limit or less, the increase of the melt viscosity during the molding process is likely to be reduced.

The amounts of the unit (A) and the unit (B), when an ethylene-(meth)acrylic acid ester copolymer is used as a raw material, and when an ionomer resin is produce d by a method comprising subjecting the copolymer to a saponification reaction process and a demetalation reaction process, can be adjusted by the reactivity of the reactions to convert (meth)acrylic acid ester units in the ethylene-(meth)acrylic acid ester copolymer into the (meth)acrylic acid unit (A) and the neutralized (meth)acrylic acid unit (B) via the saponification reaction and demetalation reaction.

The amount of the ethylene unit (C) based on all monomeric units constituting the crude ionomer resin is preferably 90mol% or more, more preferably 90.5mol% or more, and still more preferably 91mol% or more from the viewpoint that the impact resistance of the ionomer resin particulate is likely to be improved and from the viewpoint of increasing the melting point and easily holding the heat resistance, and is preferably 94mol% or less, more preferably 93mol% or less, and still more preferably 92.5mol% or less from the viewpoint that the transparency (especially, transparency after slow cooling) of the ionomer resin particulate is likely to be improved. When the amount of the ethylene unit (C) is the lower limit value or more, the mechanical properties and the molding processability are likely to be improved. When the amount is the upper limit or less, the transparency is likely to be improved.

In one embodiment of the present invention, in addition to the (meth)acrylic acid unit (A), the neutralized (meth)acrylic acid unit (B), and the ethylene unit (C), the crude ionomer resin preferably further comprises a (meth)acrylic acid ester unit (D) from the viewpoint of achieving higher transparency.

When the crude ionomer resin comprises a (meth)acrylic acid ester unit (D), the total amount of the unit (A), the unit (B), and the unit (D) is preferably from 6 to 10mol% based on all monomeric units constituting the crude ionomer resin from the viewpoint that the transparency (especially transparency after slow cooling) is likely to be improved. When the crude ionomer resin comprises a (meth)acrylic acid ester unit (D), and when the total amount of the unit (A), the unit (B), and the unit (D) is the upper limit value or less, the increase in the melt viscosity of the ionomer resin particulate during the molding process is likely to be reduced, and thus the molding processability of the ionomer resin particulate is likely to be improved. When the total amount is the lower limit or more, the transparency, especially the transparency after slow cooling, of the ionomer resin particulate is likely to be improved.

When the crude ionomer resin comprises a (meth)acrylic acid ester unit (D), the total amount of the unit (A), the unit (B), and the unit (D) is 6mol% or more, preferably 6.5mol% or more, more preferably 7.0mol% or more, and still more preferably 7.5mol% or more from the viewpoint that the transparency (especially the transparency after slow cooling) and the adhesiveness to substrates are likely to be improved, and is 10mol% or less, preferably 9.9mol% or less, and more preferably 9.5mol% or less from the viewpoint of the molding processability.

The total amount of the unit (A), the unit (B), and the unit (D) can be adjusted by raw materials of the crude ionomer resin. Specifically, the adjustment can be made by the amount of a (meth)acrylic acid ester modification of the ethylene-(meth)acrylic acid ester copolymer that is a raw material of the crude ionomer resin.

Examples of the monomer constituting the (meth)acrylic acid ester unit (D) include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, amyl (meth)acrylate, isoamyl (meth)acrylate, n-hexyl (meth)acrylate, cyclohexyl (meth)acrylate, 2-ethylhexyl (meth)acrylate, pentadecyl (meth)acrylate, dodecyl (meth)acrylate, isobornyl (meth)acrylate, phenyl (meth)acrylate, benzyl (meth)acrylate, phenoxyethyl (meth)acrylate, 2-hydroxyethyl (meth)acrylate, 2-methoxyethyl (meth)acrylate, glycidyl (meth)acrylate, and allyl (meth)acrylate.

Among them, preferred monomers are methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, and t-butyl (meth)acrylate from the viewpoint of transparency or heat resistance, and more preferred monomers are methyl (meth)acrylate, ethyl (meth)acrylate, n-propyl (meth)acrylate, isopropyl (meth)acrylate, n-butyl (meth)acrylate, and isobutyl (meth)acrylate, still more preferred monomers are methyl (meth)acrylate, n-butyl (meth)acrylate, and isobutyl (meth)acrylate, and a particularly preferred monomer is methyl (meth)acrylate. These (meth)acrylic acid esters may be used alone or in combination of two or more.

When the crude ionomer resin comprises a (meth)acrylic acid ester unit (D), the amount of the (meth)acrylic acid ester unit (D) in the crude ionomer resin is not particularly limited. In one embodiment of the present invention, the amount of the (meth)acrylic acid ester unit (D) in the crude ionomer resin based on all monomeric units constituting the crude ionomer resin is preferably more than 0mol%, more preferably 0.01mol% or more, still more preferably 0.05mol% or more, and particularly preferably 0.08mol% or more, and is preferably 1.0mol% or less, more preferably 0.7mol% or less, and still more preferably 0.5mol% or less. When the amount of the unit (D) is the lower limit value or more and the upper limit or less, the transparency of the ionomer resin particulate is likely to be improved.

When the crude ionomer resin comprises a (meth)acrylic acid ester unit (D), the amount of the unit (D), when an ethylene-(meth)acrylic acid ester copolymer is used as a raw material, and when an ionomer resin is produced by a method comprising subjecting the copolymer to a saponification reaction process and a demetalation reaction process, can be adjusted by the reactivity of the saponification reaction to convert the (meth)acrylic acid ester unit (D) in the ethylene-(meth)acrylic acid ester copolymer into a (meth)acrylic acid unit (A).

In one embodiment of the present invention, the crude ionomer resin may comprise other monomeric units other than a (meth)acrylic acid unit (A), a neutralized (meth)acrylic acid unit (B), an ethylene unit (C)and a (meth)acrylic acid ester unit (D) which is optionally contained. Examples of the other monomeric units include a carboxylic acid unit (A1) other than the (meth)acrylic acid unit, and a neutralized carboxylic acid unit (B1) other than the neutralized (meth)acrylic acid unit. Examples of the monomer constituting the carboxylic acid unit (A1) include itaconic acid, maleic anhydride, monomethyl maleate, and monoethyl maleate, and monomethyl maleate and monoethyl maleate is preferable. An example of the monomer constituting the neutralized carboxylic acid unit (B1) includes a neutralized unit of the carboxylic acid unit (A1). The neutralized carboxylic acid is obtained by substituting the hydrogen ion in carboxylic acid with a metal ion. Examples of the metal ion include the same metal ions as in the neutralized (meth)acrylic acid unit (B) as described above, and the metal ions may be used alone or in combination of two or more.

These other monomeric units may be used alone or in combination of two or more.

When the crude ionomer resin comprises the other monomeric units, the total amount of the other monomeric units, e.g., the total amount of (A1) and (B 1), may be selected as appropriate without impairing the effects of the invention, and is, for example, preferably 5mol% or less, more preferably 3mol% or less, and still more preferably 1mol% or less, and is preferably 0.01mol% or more, and more preferably 0.1mol% or more, based on all monomeric units constituting the crude ionomer resin.

The amounts of the (meth)acrylic acid unit (A), the neutralized (meth)acrylic acid unit (B), and the ethylene unit (C), as well as the (meth)acrylic acid ester unit (D) and the other monomeric units (e.g., the unit (A1) and the unit (B1)) when contained, in the crude ionomer resin according to the present invention can be determined by first identifying the monomeric units in the crude ionomer resin by pyrolysis gas chromatography, and then performing nuclear magnetic resonance spectroscopy (NMR) and elementary analysis. Since the amounts of monomeric units in an ionomer resin particulate obtained by the production method of the present invention correspond to the amounts of the monomeric units in a crude ionomer resin, the amounts of monomeric units in a crude ionomer resin may be also determined by analyzing the obtained ionomer resin particulate instead of crude ionomer resin, and more specifically can be determined by the methods described in Examples. The amounts can also be determined by a method combining the analysis described above and IR and/or Raman analysis. Preferably, components other than the crude ionomer resin or the obtained ionomer resin particulate are removed by a reprecipitation method or a Soxhlet extraction method before these analyses.

### (Method of Producing Crude Ionomer Resin)

The method of producing a crude ionomer resin is not particularly limited, and may be, for example, an EMMA saponification method, specifically, a method in which using an ethylene-(meth)acrylic acid ester copolymer (X) as a raw material, all or some of (meth)acrylic acid ester units in the copolymer are converted to (meth)acrylic acid units and neutralized (meth)acrylic acid units.

The method of converting all or some of the (meth)acrylic acid ester units to (meth)acrylic acid units and neutralized (meth)acrylic acid units may be a method (hereinafter, also referred to as "method (1)") comprising subjecting the ethylene-(meth)acrylic acid ester copolymer (X) to saponification with alkali to convert all or some of the (meth)acrylic acid ester units to neutralized (meth)acrylic acid units and obtain an ethylene-neutralized (meth)acrylic acid copolymer or an ethylene-(meth)acrylic acid ester-neutralized (meth)acrylic acid copolymer, and then demetallizing some of the neutralized (meth)acrylic acid units in the obtained copolymer with an acid to convert them to (meth)acrylic acid units.

The method other than the method (1) may be a method (hereinafter, also referred to as "method (2)") comprising demetallizing all of the neutralized (meth)acrylic acid units in the ethylene-neutralized (meth)acrylic acid copolymer or ethylene-(meth)acrylic acid ester-neutralized (meth)acrylic acid copolymer obtained by saponification in the method (1) with an acid to convert them to (meth)acrylic acid units and obtain an ethylene-(meth)acrylic acid copolymer or an ethylene-(meth)acrylic acid ester-(meth)acrylic acid copolymer, and then neutralizing some of the (meth)acrylic acid units in the obtained copolymer with a metal ion.

Of the methods (1) and (2), the method (1) is preferably used for producing crude ionomer resins from the viewpoint that of reducing the number of reactions and improving the efficiency of producing ionomer resins.

Examples of the monomer constituting the (meth)acrylic acid ester unit of the ethylene-(meth)acrylic acid ester copolymer (X) include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, amyl (meth)acrylate, isoamyl (meth)acrylate, n-hexyl (meth)acrylate, cyclohexyl (meth)acrylate, 2-ethylhexyl (meth)acrylate, pentadecyl (meth)acrylate, dodecyl (meth)acrylate, isobornyl (meth)acrylate, phenyl (meth)acrylate, benzyl (meth)acrylate, phenoxyethyl (meth)acrylate, 2-hydroxyethyl (meth)acrylate, 2-methoxyethyl (meth)acrylate, glycidyl (meth)acrylate, and allyl (meth)acrylate. Among them, preferred monomers are methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, and t-butyl (meth)acrylate, more preferred monomers are methyl (meth)acrylate, ethyl (meth)acrylate, n-propyl (meth)acrylate, isopropyl (meth)acrylate, n-butyl (meth)acrylate, and isobutyl (meth)acrylate, still more preferred monomers are methyl (meth)acrylate, n-butyl (meth)acrylate, and isobutyl (meth)acrylate, and a particularly preferred monomer is methyl (meth)acrylate. These (meth)acrylic acid esters may be used alone or in combination of two or more.

Specific examples of the ethylene-(meth)acrylic acid ester copolymer (X) include ethylene-methyl acrylate copolymer, ethylene-methyl methacrylate copolymer, ethylene-ethyl acrylate copolymer, ethylene-ethyl methacrylate copolymer, ethylene-n-propyl acrylate copolymer, ethylene-n-propyl methacrylate copolymer, ethylene-isopropyl acrylate copolymer, ethylene-isopropyl methacrylate copolymer, ethylene-n-butyl acrylate copolymer, ethylene-n-butyl methacrylate copolymer, ethylene-sec-butyl acrylate copolymer, and ethylene-sec-butyl methacrylate copolymer.

The copolymer used may be commercially available, or synthesized by high-temperature high-pressure radical polymerization described in US 2013/0274424 A, JP 2006-233059 A, or JP 2007-84743 A. Examples of the commercially available copolymer include "ACRYFT" (registered trademark) WD301F and WK307, produced by Sumitomo Chemical Co., Ltd., "REXPEARL" (registered trademark) A4250, produced by Japan Polyethylene Corporation, and NUC-6070 produced by NUC Corporation.

The amount of the (meth)acrylic acid ester unit in the ethylene-(meth)acrylic acid ester copolymer (X) is preferably 6mol% or more, more preferably 6.5mol% or more, still more preferably 7mol% or more, and particularly preferably 7.5mol% or more, and is preferably 10mol% or less, more preferably 9.9mol% or less, and still more preferably 9.5mol% or less. The total amount of the (meth)acrylic acid unit (A) and the neutralized (meth)acrylic acid unit (B), as well as the (meth)acrylic acid ester unit (D), when included, in the crude ionomer resin and ionomer resin particulate to be obtained can be adjusted by the amount of the (meth)acrylic acid ester unit in the copolymer (X). Thus, when the amount of the (meth)acrylic acid ester unit in the copolymer (X) is the lower limit value or more, the transparency, especially the transparency after slow cooling, of the obtained ionomer resin particulate is likely to be improved. When the amount is the upper limit value or less, the molding processability of the obtained ionomer resin is likely to be improved.

The amount described above can be adjusted by the copolymerization ratio between ethylene and (meth)acrylic acid ester. The amount can be determined, similar to the amounts of the (meth)acrylic acid unit (A), the neutralized (meth)acrylic acid unit (B), and the ethylene unit (C), as well as the (meth)acrylic acid ester unit (D) and the other monomeric units (e.g., the unit (A1) and the unit (B1)) when contained, in the crude ionomer resin as described above, by pyrolysis gas chromatography, nuclear magnetic resonance spectroscopy (NMR), and elementary analysis.

In one embodiment of the present invention, the Melt Flow Rate (MFR) of the ethylene-(meth)acrylic acid ester copolymer (X) as measured according to JIS K7210-1:2014 at 190°C and 2.16 Kg, is preferably 1 g/10 min or more, more preferably 5 g/10 min or more, still more preferably 10 g/10 min or more, even still more preferably 50 g/10 min or more, and particularly preferably 100 g/10 min or more, and is preferably 400 g/10 min or less, more preferably 350 g/10 min or less, still more preferably 300 g/10 min or less, and even still more preferably 250 g/10 min or less. When the MFR of the ethylene-(meth)acrylic acid ester copolymer (X) is the lower limit value or more and the upper limit value or less, the molding processability of the obtained ionomer resin particulate is likely to be improved. In addition, the strength of the obtained ionomer resin particulate is likely to be increased, and the handleability is likely to be improved. The MFR of the ethylene-(meth)acrylic acid ester copolymer (X) can be adjusted by the degree of polymerization and the amount of the (meth)acrylic acid ester unit. The MFR can be measured, for example, by methods described in Examples.

The weight average molecular weight of the ethylene-(meth)acrylic acid ester copolymer (X) is preferably 15,000 g/mol or more, more preferably 20,000 g/mol or more, and still more preferably 30,000 g/mol or more, and is preferably 200,000 g/mol or less, and more preferably 100,000 g/mol or less from the viewpoint that the molding processability and the strength of the obtained ionomer resin particulate are likely to be improved. From the same viewpoint, the number average molecular weight of the ethylene-(meth)acrylic acid ester copolymer (X) is preferably 5,000 g/mol or more, more preferably 10,000 g/mol or more, and still more preferably 15,000 g/mol or more, and is preferably 100,000 g/mol or less, and more preferably 50,000 g/mol or less. The weight average molecular weight and the number average molecular weight can be adjusted by the polymerization initiator and/or the amount of the chain transfer agent during polymerization. The molecular weight (weight average molecular weight and number average molecular weight) of the ethylene-(meth)acrylic acid ester copolymer (X) can be measured using a column (three TSKgel GMH_{HR}-H(20)HT in tandem) and a 1,2,4-trichlorobenzene solvent at a column temperature of 140°C in terms of polystyrene.

The degree of branching per 1,000 carbons in the ethylene-(meth)acrylic acid ester copolymer (X) is not particularly limited, and is preferably from 5 to 30, and more preferably from 6 to 20. The degree of branching can be adjusted by the polymerization temperature during polymerization of the copolymer (X). The degree of branching per 1,000 carbons can be measured by dissolving the ethylene-(meth)acrylic acid ester copolymer (X) in deuterated ortho-dichlorobenzene and performing inverse gated decoupling ¹³C-NMR.

Examples of the alkali used in the saponification reaction in the methods (1) and (2) described above include strong bases such as sodium hydroxide, potassium hydroxide, and calcium hydroxide, and the alkali is preferably sodium hydroxide or potassium hydroxide from the view point of the solubility in the solvent used in the saponification reaction and the economy.

Examples of the solvent used in the saponification reaction include ethers such as tetrahydrofuran and dioxane; halogen-containing solvents such as chloroform and dichlorobenzene; ketones with a carbon number of 6 or more such as methyl butyl ketone; mixed solvents of a hydrocarbon compound and an alcohol such as methanol, ethanol, 1-propanol, 2-propanol, or 1-butanol; aromatic compounds such as benzene, toluene, xylene, and ethylbenzene; and mixed solvents of an aromatic compound and an alcohol. These solvents may be used alone or in combination of two or more.

Among these, the solvent is preferably a mixed solvent of a hydrocarbon compound and an alcohol, or a mixed solvent of an aromatic compound and an alcohol, and more preferably a mixed solvent of an aromatic compound such as toluene and an alcohol such as methanol, from the viewpoint of the solubility of the resin before and after the saponification reaction. The ratio of a hydrocarbon compound or an aromatic compound to an alcohol in the mixed solvent may be selected as appropriate depending on the type of the solvent used. For example, the mass ratio of a hydrocarbon compound or an aromatic compound to an alcohol (hydrocarbon compound or aromatic compound/alcohol) may be from 50/50 to 90/10.

The temperature during the saponification reaction is preferably 50°C or higher, more preferably 60°C or higher, still more preferably 70°C or higher, and particularly preferably 80°C or higher from the viewpoint of the reactivity and the solubility of the ethylene-(meth)acrylic acid ester copolymer (X). The upper limit of the temperature is not particularly limited as long as it is lower than the temperature at which the ethylene-(meth)acrylic acid ester copolymer (X) decomposes, and is, for example, 300°C or lower.

The saponification reaction may be performed in the air, or in an inert gas such as nitrogen gas or argon gas. The saponification reaction may be performed either under normal pressure, under increased pressure, or under reduced pressure, and is preferably performed under increased pressure.

Examples of the acid used in demetalation in the methods (1) and (2) include strong acids such as hydrochloric acid, nitric acid, sulfuric acid, and toluenesulfonic acid. Preferably, the acid is an inorganic acid such as hydrochloric acid, nitric acid, or sulfuric acid from the viewpoint of ease of removal of the salt after demetalation. The same solvent as that used in the saponification reaction can be selected as a solvent used in the demetalation.

The temperature during the demetalation is preferably 20°C or higher, more preferably 30°C or higher, and still more preferably 40°C or higher, and is preferably 100°C or lower, more preferably 80°C or lower, still more preferably 70°C or lower, and even still more preferably 60°C or lower from the viewpoint of the solubility of the resin and the viewpoint that the viscosity of the reaction solution is likely to be lowered.

Similar to the saponification reaction, the demetalation may also be performed in the air, or in an inert gas such as a nitrogen gas or an argon gas. The saponification reaction may be performed either under normal pressure, under increased pressure, or under reduced pressure, and is preferably performed under increased pressure.

The neutralizer used in neutralization of some (meth)acrylic acid units to convert them to neutralized (meth)acrylic acid units in the method (2) is not particularly limited as long as it is an ionic compound comprising a metal ion. Examples of the metal ion include alkali metal ions such as lithium, potassium, and sodium; alkali earth metal ions such as magnesium and calcium; transition metal ions such as zinc, nickel, iron, and titanium; and aluminum ion. For example, when the metal ion is a sodium ion, examples of the neutralizer include sodium hydroxide, sodium acetate, and sodium bicarbonate. In addition, polymers such as ionomer resins comprising sodium (meth)acrylate units can also be used as the neutralizer.

In one embodiment of the present invention, the degree of saponification in the crude ionomer resin obtained by the EMMA saponification method, that is, the ratio of the total of the (meth)acrylic acid unit (A) and the neutralized (meth)acrylic acid unit (B) to the total of the (meth)acrylic acid unit (A), the neutralized (meth)acrylic acid unit (B), and the (meth)acrylic acid ester unit (D) may be preferably 85 to 100%, more preferably 87 to 99.5%, and still more preferably 90 to 99% from the viewpoint that the adhesiveness to glass is likely to be enhanced. In one embodiment of the present invention, the degree of neutralization of the crude ionomer resin obtained by the EMMA saponification method, that is, the ratio of the neutralized (meth)acrylic acid unit (B) to the total of the (meth)acrylic acid unit (A) and the neutralized (meth)acrylic acid unit (B) is preferably 0 to 55%, more preferably 10 to 40%, and still more preferably 15 to 30% from the viewpoint of easy molding into a resin sheet and from the viewpoint that the transparency after slow cooling of the obtained resin sheet is likely to be increased.

### (Solvent)

The solvent in the step (I) is not particularly limited as long as it is a solvent capable of dissolving the crude ionomer resin, and examples thereof include ethers such as tetrahydrofuran and dioxane; halogen-containing solvents such as chloroform and dichlorobenzene; ketones having 6 or more carbon atoms such as methyl butyl ketone; nitrogen-containing compounds such as pyridine, N-methyl-2-pyrrolidone, and dimethylformamide; hydrocarbon compounds such as n-heptane, n-hexane, and cyclohexane; alcohols such as methanol, ethanol, 1-propanol, 2-propanol, and 1-butanol; aromatic compounds such as benzene, toluene, xylene, and ethylbenzene; and mixed solvents thereof.

Among them, mixed solvents of an aromatic compound such as toluene, and an alcohol such as methanol, are preferable from the viewpoint of the solubility of the crude ionomer resin. The ratio of an aromatic compound to an alcohol in the mixed solvent may be selected as appropriate depending on the type of the solvent used. For example, the mass ratio of an aromatic compound to an alcohol (aromatic compound/alcohol) may be from 50/50 to 90/10, preferably from 60/40 to 85/15, and more preferably from 65/35 to 80/20.

These solvents in the step (I) may contain water to the extent that the crude ionomer resin can be dissolved. In one embodiment of the present invention, the amount of water is preferably 30% by mass or less, more preferably 20% by mass or less, still more preferably less than 15% by mass, and particularly preferably 14% by mass or less, and is preferably 0% by mass or more, more preferably 0.1% by mass or more, and still more preferably 1% by mass or more based on the total mass of the solvent from the viewpoint of the solubility of the crude ionomer resin.

### (Mixture containing crude ionomer resin and solvent)

The mixture containing a crude ionomer resin and a solvent (hereinafter also simply referred to as "mixture" or "crude ionomer resin mixture") in the step (I) can be prepared by mixing the crude ionomer resin and the solvent. In one embodiment of the present invention, a reaction solution of a crude ionomer resin obtained by producing the crude ionomer resin by the method (1) or (2) described above, or a mixture obtained by further adding a solvent to the reaction solution may be used as the mixture containing a crude ionomer resin and a solvent.

In one embodiment of the present invention, the concentration of the crude ionomer resin in the crude ionomer resin mixture is preferably less than 19% by mass, more preferably 18% by mass or less, still more preferably 16% by mass or less, even still more preferably 14% by mass or less, and particularly preferably 12% by mass or less. The lower the concentration of the crude ionomer resin in the mixture, the more the porosity of a resulting particulate is increased. Therefore, when the concentration is less than the upper limit or less than or equal to the upper limit, the porosity of the resulting particulate is easily adjusted to 60% or more. As a result, the removability of salts is easily improved, and an ionomer resin particulate superior in transparency is likely to be obtained. The concentration of the crude ionomer resin in the mixture is preferably 1% by mass or more, more preferably 3% by mass or more, still more preferably 5% by mass or more, and particularly preferably 8% by mass or more. When the concentration is the above lower limit or more, an ionomer resin particulate having high strength and superior handleability is likely to be obtained.

### (Extrusion and cooling)

The method for extruding the crude ionomer resin mixture and cooling the extruded mixture to solidify the crude ionomer resin in the mixture is not particularly limited. When the extruded mixture is cooled to solidify the crude ionomer resin in the mixture, the solvent portion of the crude ionomer resin solidified becomes pores, so that a porous solidified product can be obtained.

In one embodiment of the present invention, the temperature of the mixture at the time of extruding the mixture is preferably 68°C or lower, more preferably 65°C or lower, still more preferably 63°C or lower, even still more preferably 60°C or lower, and particularly preferably 55°C or lower from the viewpoint of obtaining a porous particulate having a porosity of 60% or more in step (I) and from the viewpoint of preventing agglutination of the obtained porous particulate and easily improving the handleability. From the viewpoint that the fluidity of the mixture is increased, the temperature of the mixture is preferably 30°C or higher, more preferably 35°C or higher, still more preferably 38°C or higher, and particularly preferably 40°C or higher. The temperature may be selected as appropriate depending on the concentration of the crude ionomer resin in the mixture. When the concentration of the crude ionomer resin is relatively low, the particulates are less likely to aggregate or agglutinate, and thus the temperature of the mixture can be relatively low.

The method for cooling the extruded mixture is not particularly limited, and the extruded mixture may be cooled with cold air, but it is preferable to cool the extruded mixture by bringing the extruded mixture into contact with a poor solvent. When the extruded mixture is cooled by bringing the mixture into contact with a poor solvent, the cooling rate is increased and bleeding out of the solvent from the mixture is inhibited, so that the porosity of the particulate is easily adjusted to 60% or more. In addition, the progress of phase separation between the crude ionomer resin and the solvent is inhibited, so that the median diameter of pores of the particulate is easily prevented from becoming excessively large. As a result, the transparency and handleability of the obtained ionomer resin particulate are easily improved.

The poor solvent for cooling the mixture is not particularly limited as long as it is a solvent capable of solidifying the crude ionomer resin in the mixture, and water, an alcohol, or a mixed solvent thereof is preferable from the viewpoint that the salts in the crude ionomer resin mixture is easily dissolved and easily removed. Examples of the alcohol include methanol, ethanol, 1-propanol, 2-propanol, and 1-butanol, and methanol and ethanol are preferable, and methanol is more preferable. The alcohol may be used alone or two or more thereof may be used in combination. Among these poor solvents, water is preferable.

The temperature of the poor solvent is not particularly limited as long as the extruded mixture can be cooled, in other words, as long as the temperature is lower than the temperature of the extruded mixture. In one embodiment of the present invention, the temperature of the poor solvent is preferably 60°C or lower, more preferably 50°C or lower, still more preferably 40°C or lower, and particularly preferably 30°C or lower from the viewpoint of solidifying the crude ionomer resin in the mixture, increasing the cooling rate, and adjusting the porosity to 60% or more. The temperature may be 0°C or higher.

In one embodiment of the present invention, the temperature difference between the mixture temperature during extrusion and the poor solvent temperature is preferably 10°C or higher, more preferably 20°C or higher, still more preferably 30°C or higher, and preferably 60°C or lower from the viewpoint of increasing the cooling rate and adjusting the porosity to 60% or higher.

The method for bringing the extruded mixture into contact with the poor solvent is not particularly limited, and examples thereof include a method of immersing the extruded mixture in the poor solvent and a method of pouring the poor solvent on the extruded mixture.

The method for obtaining the porous particulate from the crude ionomer resin mixture is not particularly limited, and examples thereof include a method in which the crude ionomer resin mixture is extruded in a strand shape into a poor solvent, and the obtained strand is cut (strand method), a method in which the crude ionomer resin mixture is extruded into a poor solvent, and the mixture is cut immediately after being extruded (underwater hot-cutting method), and a method in which the crude ionomer resin mixture is extruded, the mixture is cut immediately after being extruded, and the obtained cut products are brought into contact with a poor solvent (hot-cutting method). The cutting may be performed with a strand cutter or the like.

### (Porous particulate)

The porosity of the porous particulate obtained in the step (I) is 60% or more. When the porosity of the porous particulate is 60% or more, the surface area is increased, so that salts are easily removed from the particulate, and as a result, an ionomer resin particulate superior in transparency and handleability can be obtained.

In one embodiment of the present invention, the porosity of the particulate obtained in the step (I) is preferably 62% or more, more preferably 64% or more, still more preferably 68% or more, and particularly preferably 70% or more. When the porosity is equal to or more than the above lower limit, the removability of salts can be improved, so that an ionomer resin particulate having superior transparency is likely to be obtained. The porosity is preferably 90% or less, more preferably 85% or less, still more preferably 80% or less, and particularly preferably 75% or less. When the porosity is equal to or less than the above upper limit, an ionomer resin particulate having high strength and superior handleability is likely to be obtained.

The porosity of the particulate obtained in the step (I) can be adjusted by the concentration of the crude ionomer resin in the crude ionomer resin mixture, the temperature at the time of extrusion of the crude ionomer resin mixture, the extrusion rate, the cooling rate, the size of the particulate, and so on. For example, when the concentration of the crude ionomer resin in the crude ionomer resin mixture is increased, or the cooling rate is decreased, or the size of the particulate is increased, the porosity is easily decreased. When the concentration of the crude ionomer resin mixture is decreased, or the cooling rate is increased, or the size of the particulate is decreased, the porosity is easily increased.

In one embodiment of the present invention, from the viewpoint that the removability of salts is improved, and an ionomer resin particulate superior in transparency is obtained, the median diameter of pores of the particulate obtained in the step (I) is preferably 0.05 µm or more, more preferably 0.1 µm or more, still more preferably 0.3 µm or more, and particularly preferably 0.5 µm or more. The median diameter of the pores is preferably 1.2 µm or less, more preferably 1.0 µm or less, still more preferably 0.9 µm or less, and particularly preferably 0.8 µm or less from the viewpoint that an ionomer resin particulate having high strength and superior handleability is likely to be obtained.

The porosity and the median diameter of pores can be measured by mercury intrusion porosimetry using a pore distribution analyzer, and for example, can be measured by the method described in Examples. The porosity and the median diameter of the pores of the particulate obtained in the step (I) are hardly or not at all changed by the washing step described later or the like. Therefore, the porosity and the median diameter of the pores of the obtained ionomer resin particulate can also be regarded as the porosity and the median diameter of the pores of the particulate obtained in the step (I).

In one embodiment of the present invention, the particulate obtained in the step (I) is preferably a pellet having a spherical shape, a columnar shape, an elliptical columnar shape, a polygonal columnar shape, a rugby ball shape, or the like, and more preferably a pellet having a columnar shape, an elliptical columnar shape, or a polygonal columnar shape. In one embodiment of the present invention, the size of the pellet is preferably 1 mm or more, more preferably 1.5 mm or more, and still more preferably 2 mm or more from the viewpoint that an ionomer resin particulate superior in handleability is likely to be obtained. The pellet size is preferably 8 mm or less, more preferably 6 mm or less, and still more preferably 5 mm or less from the viewpoint that the porosity is adjusted to 60% or more and an ionomer resin particulate superior in transparency is likely to be obtained.

In the present invention, when the pellet has a columnar shape, an elliptic columnar shape, or a polygonal columnar shape, the pellet size per grain is an average value ((Lx + Ly + Lz)/3) of the length (Lx) of the X-axis, the length (Ly) of the Y-axis, and the length (Lz) of the Z-axis of the pellet. It is preferable that the pellet size is an arithmetic average value of the average values of the lengths of the X-axis, the Y-axis, and the Z-axis of respective at least 10 or more grains of pellet. Here, the length (Lx) of the X-axis of a pellet is the height of the pellet, the length (Ly) of the Y-axis is the length of the longest part among diameters or diagonals of a face perpendicular to the X-axis (a bottom face of the pellet), and the length (Lz) of the Z-axis is the length of the shortest part among the diameters or diagonals of the bottom face of the pellet. When the bottom face is triangular, the length (Ly) of the Y-axis is the longest side of the bottom face, and the length (Lz) of the Z-axis is the length of the shortest side of the bottom face. Therefore, for example, in the case of elliptic columnar pellets, the pellet size per grain is an average value ((height + major axis diameter + minor axis diameter)/3) of the height (Lx), the major axis diameter (Ly), and the minor axis diameter (Lz) of an elliptic column. A conceptual diagram of the length (Lx) of the X-axis, the length (Ly) of the Y-axis, and the length (Lz) of the Z-axis in a pellet is shown in Fig. 1. The right diagram in Fig. 1 is a plan view of the pellet illustrated in the left diagram in Fig. 1 viewed from the X-axis direction. The pellet size can be calculated by measuring the length (Lx) of the X-axis, the length (Ly) of the Y-axis, and the length (Lz) of the Z-axis of each pellet with a micrometer or the like, and is obtained, for example, by the method described in Examples. In addition, in the present invention, when the pellet is spherical, the pellet size per grain is the diameter of the pellet, and it is preferable that the pellet size is an average value of the diameters of 10 or more grains of pellet. In the present invention, when the pellet is in the form of a rugby ball, the pellet size per grain is an average value ((major axis + minor axis)/2) of the major axis and minor axis of the pellet, and it is preferable that the pellet size is an arithmetic average value of the average values of the major axis and minor axis of respective 10 or more grains of pellet. In one embodiment of the present invention, the pellet size can be adjusted by the diameter of the die at the time of extrusion, the length of the extruded mixture in the extrusion direction at the time of cutting, and so on.

### <Step (II)>

In one embodiment of the present invention, the method of the present invention preferably further comprises a step of washing the porous particulate obtained in the step (I) with a washing liquid (this step is hereinafter also referred to as "step (II)"). By washing the particulate having a porosity of 60% or more obtained in the step (I) with a washing liquid in the step (II), the salts in the particulate are easily removed, so that the amount of the salts in the obtained ionomer resin particulate is reduced, and an ionomer resin particulate superior in transparency, especially transparency after water absorption is likely to be obtained.

The washing liquid is not particularly limited as long as it is a solvent in which the ionomer resin particulate is insoluble and salts can be dissolved. Preferred examples of the washing liquid include alcohols such as methanol, ethanol, 1-propanol, and 2-isopropanol; water; ketones such as acetone and methyl ethyl ketone; esters such as methyl acetate and ethyl acetate; and ethers such as dimethyl ether, diethyl ether, and tetrahydrofuran. These may be used alone or in combination of two or more.

Among these washing liquids, from the viewpoint that the solubility of salts is high and the salts contained in the porous particulate obtained in the step (I) are easily removed, alcohols, water, and mixed solutions thereof are preferable, and a mixed solution of water and an alcohol is more preferable. When the washing liquid is a mixed solution of water and an alcohol, the solubility of salts can be increased, and the specific gravity of the washing liquid can be made lower than that of the particulate, so that the contact area between the washing liquid and the particulate can be increased, and the removability of the salts can be increased. In addition, impurities such as organic compounds contained in the particulate can be removed, and the ionomer resin particulate obtained after washing is easily dried. Preferred alcohols are methanol and ethanol, and more preferred is methanol, due to their ease of drying and high compatibility with water.

The ratio of water to an alcohol in the mixed solution of water and the alcohol (water/alcohol (% by mass)) is preferably from 20/80 to 80/20, and more preferably from 30/70 to 70/30.

The method for washing the particulate obtained in the step (I) with a washing liquid is not particularly limited, and examples thereof include a method in which the particulate obtained in the step (I) is mixed with a washing liquid and then the solution is removed. One more specific example is a method comprising a step of mixing the particulate and the washing liquid, and then separating the particulate from the washing liquid by filtration (this step is hereinafter also referred to as "washing step (a)"), and a step of subsequently mixing the separated particulate with a fresh washing liquid, and then separating the particulate from the washing liquid by filtration (this step is hereinafter also referred to as "washing step (b)").

From the viewpoint of reducing the amount of the salts contained in the particulate to make it easy to obtain an ionomer resin particulate superior in transparency, especially transparency after water absorption, and from the viewpoint that the efficiency of the step of separating and purifying the ionomer resin particulate is easily improved, the washing of the particulate is preferably carried out, in the case of a batch process, by performing the washing step (a) once and then performing the washing step (b) 1 to 10 times. The number of times of the washing step (b) after the one washing step (a) is more preferably 1 to 6, and still more preferably 1 to 4.

The amount of the washing liquid used per washing step may be selected as appropriate depending on the amount of the particulate to be washed. For example, the amount of the washing liquid used per washing step is preferably from 100 parts by mass to 2,000 parts by mass, more preferably from 200 parts by mass to 1,000 parts by mass, and still more preferably from 300 parts by mass to 700 parts by mass based on 100 parts by mass of the particulate after drying.

The ionomer resin particulate washed in the step (II) may be dried as necessary. The drying temperature may be preferably the melting point of the ionomer resin particulate or lower, and more preferably 80°C or lower.

### <Ionomer Resin particulate>

Since the method of the present invention includes the step (I) and optionally the step (II), the removability of salts can be improved. Therefore, the ionomer resin particulate obtained by the method of the present invention, that is, the granular ionomer resin is superior in transparency and handleability.

In one embodiment of the present invention, the crude ionomer resin contains the salts produced via a neutralization reaction between alkalis and acids in the process of producing the crude ionomer resin in an amount of 100,000 to 500,000 mg/kg. However, the ionomer resin particulate obtained by the method of the present invention has superior transparency because it contains a sufficiently reduced amount of the salts produced in the process of producing the crude ionomer resin. The salts that are produced in the process of producing the crude ionomer resin are salts composed of a strong base described above as an alkali used in the saponification reaction and a strong acid described above as an acid used in the demetalation reaction. A single one or a combination of two or more of the salts may be contained.

In one embodiment of the present invention, the amount of the salts in the ionomer resin particulate is preferably 1000 mg/kg or less, more preferably 700 mg/kg or less, still more preferably 400 mg/kg or less, even still more preferably 350 mg/kg or less, particularly preferably 300 mg/kg or less, and particularly further preferably 250 mg/kg or less from the viewpoint that the transparency, especially the transparency after water absorption, of the ionomer resin particulate. Since a smaller amount of the salts in the ionomer resin particulate tends to result in further improved transparency (especially, transparency after water absorption) of the ionomer resin particulate, the lower limit is not particularly limited, and may be 0 mg/kg or more, and preferably may be 1 mg/kg or more from the viewpoint that the resistance to thermal decomposition of the ionomer resin particulate is likely to be improved. The amount of salts in the ionomer resin particulate can be measured by ion chromatography, for example, by the method described in Examples.

Examples of the salt composed of a strong acid and a strong base include lithium salts, sodium salts, potassium salts, rubidium salts, and cesium salts. Preferred examples include alkali metal salts such as lithium salts, sodium salts, and potassium salts; and alkaline earth metal salts such as beryllium salts, magnesium salts, calcium salts, strontium salts, and barium salts. Preferred salts are sodium salts and potassium salts from the viewpoint that the resistance to thermal decomposition of the ionomer resin particulate is likely to be improved. More preferably, the salts may be, for example, composed of at least one cations selected from the group consisting of a sodium ion, a potassium ion, a magnesium ion, and a calcium ion, and at least one anions selected from the group consisting of a halogen ion, a sulfate ion, a nitrate ion, and a sulfonate ion. The salts are preferably composed of at least one cations selected from the group consisting of a sodium ion and a potassium ion and at least one anions selected from the group consisting of a halogen ion, a sulfate ion, and a nitrate ion from the viewpoint that the resistance to thermal decomposition of the ionomer resin particulate is likely to be improved.

More specifically, preferred examples of the salt composed of a strong acid and a strong base include sodium chloride, potassium chloride, magnesium chloride, calcium chloride, sodium sulfate, potassium sulfate, magnesium sulfate, calcium sulfate, sodium nitrate, potassium nitrate, magnesium nitrate, calcium nitrate, sodium p-toluenesulfonate, potassium p-toluenesulfonate, magnesium p-toluenesulfonate, and calcium p-toluenesulfonate. More preferably, the salt may be sodium chloride, potassium chloride, sodium sulfate, potassium sulfate, sodium nitrate, potassium nitrate, still more preferably sodium chloride, sodium sulfate, or sodium nitrate from the viewpoint that the transparency and the heat resistance are likely to be improved.

The ionomer resin particulate comprises a (meth)acrylic acid unit (A), a neutralized (meth)acrylic acid unit (B), and an ethylene unit (C), wherein the total amount of the unit (A) and the unit (B) is from 6 to 10mol% based on all monomeric units constituting the ionomer resin particulate. In addition to the unit (A), the unit (B), and the ethylene unit (C), the ionomer resin particulate may comprise a (meth)acrylic acid ester unit (D), and/or other monomeric units such as a carboxylic acid unit other than the (meth)acrylic acid unit (A1) and a neutralized carboxylic acid unit other than the neutralized (meth)acrylic acid unit (B 1).

The unit (A) and the unit (B), as well as, the unit (D), and other monomeric units (A1) and (B 1) that are optionally included, in the ionomer resin particulate may be, for example, the same units as the unit (A), unit (B), unit (D), unit (A1), and unit (B 1) included in the crude ionomer resin as described above, respectively, and the preferred embodiments are also the same as the crude ionomer resin as described above. Also, the amounts of the units in the ionomer resin particulate, the total amount of the unit (A) and the unit (B), and the total amount of the unit (A), the unit (B), and the unit (D) when the ionomer resin particulate comprises the (meth)acrylic acid ester unit (D), including the preferred embodiments, are the same as the amounts as described for the crude ionomer resin.

The ionomer resin particulate is preferably porous, and preferably has the same pore structure as that of the porous particulate obtained in the step (I). With regard to the porosity and the median diameter of the pores of the ionomer resin particulate, the descriptions regarding the porosity and the median diameter of the pores of the particulate obtained in step (I) apply in the same manner. Since the porosity and the median diameter of the pores of the ionomer resin particulate change little or not at all from the porosity and the median diameter of the pores of the porous particulate obtained in the step (I), the porosity and the median diameter of the pores of the porous particulate obtained in the step (I) can also be regarded as the porosity and the median diameter of the pores of the ionomer resin particulate.

The ionomer resin particulate is preferably a pellet having a spherical shape, a columnar shape, an elliptical columnar shape, a polygonal columnar shape, a rugby ball shape, or the like, and more preferably a pellet having a columnar shape, an elliptical columnar shape, or a polygonal columnar shape. With regard to the pellet size of the ionomer resin particulate, the descriptions regarding the pellet size of the particulate obtained in step (I) apply in the same manner.

The degree of branching per 1000 carbons in the ionomer resin particulate is not particularly limited, and is preferably from 5 to 30, and more preferably from 6 to 20. The degree of branching can be adjusted by the polymerization temperature at which an ethylene-(meth)acrylic acid ester copolymer (X) that is a raw material of the ionomer resin is synthesized. The degree of branching per 1000 carbons can be measured by a DDMAS method using solid-state NMR.

The melting point of the ionomer resin particulate is preferably 50°C or higher, more preferably 60°C or higher, and still more preferably 80°C or higher from the viewpoint of heat resistance, and is preferably 200°C or lower, more preferably 180°C or lower, and still more preferably 150°C or lower from the viewpoint that the adhesiveness to substrates is likely to be developed during preparation of the laminated glass. The melting point can be measured according to JIS K7121: 2012. Specifically, the melting point can be determined from the peak top temperature of the melting peak during the second temperature rising, obtained by measurement using a differential scanning calorimeter (DSC) at a cooling rate of -10°C/min and a temperature rising rate of 10 °C/min.

The heat of melting of the ionomer resin particulate is preferably from 0 J/g to 25 J/g. The heat of melting can be measured according to JIS K7122: 2012. Specifically, the heat of melting can be determined from the area of the melting peak during the second temperature rising, obtained by measurement using a differential scanning calorimeter (DSC) at a cooling rate of -10°C/min and a temperature rising rate of 10°C/min.

The Melt Flow Rate (MFR) of the ionomer resin particulate, as measured at 190°C and 2.16 Kg according to JIS K7210-1: 2014, is preferably 0.1 g/10 min or more, more preferably 0.3 g/10 min or more, still more preferably 0.7 g/10 min or more, even still more preferably 1.0 g/10 min or more, and particularly preferably 1.5 g/10 min or more, and is preferably 50 g/10 min or less, more preferably 30 g/10 min or less, and particularly preferably 10 g/10 min or less. When the MFR is the lower limit value or more and the upper limit value or less, a molding process with reduced heat deterioration is likely to be achieved, so that a resin sheet with excellent penetration resistance is likely to be obtained.

The melting point, the heat of melting, and the MFR of the ionomer resin particulate can be adjusted by the molecular weight of the ionomer resin, as well as by the amounts of the (meth)acrylic acid unit (A), the neutralized (meth)acrylic acid unit (B), and the ethylene unit (C), and of the (meth)acrylic acid ester unit (D) that is optionally contained.

The storage elastic modulus (E') at 50°C of the ionomer resin particulate, as measured by a dynamic viscoelasticity measurement, is preferably 20 MPa or more, more preferably 30 MPa or more, still more preferably 40 MPa or more, and particularly preferably 50 MPa or more from the viewpoint of good self-standing properties (i.e., high elastic modulus), especially self-standing properties in high temperature environments (high elastic modulus in high temperature environments). The upper limit of the storage elastic modulus (E') is not particularly limited and may be 1,000 MPa. The storage elastic modulus can be adjusted by the molecular weight of the ionomer resin, as well as by the amounts of the (meth)acrylic acid unit (A), the neutralized (meth)acrylic acid unit (B), and the ethylene unit (C), and of the (meth)acrylic acid ester unit (D) that is optionally contained, of the ionomer resin.

The ionomer resin particulate obtained by the method of the present invention has a reduced amount of salts in the ionomer resin particulate, and thus exhibits high transparency. The haze value of the ionomer resin particulate is preferably 2.0% or less, more preferably 1.5% or less, and still more preferably 1.0% or less. Lower haze values result in improved transparency of the ionomer resin particulate, and thus, the lower limit value is not particularly limited, and may be, for example, 0.01% or more. The haze value of the ionomer resin particulate is measured using a haze meter according to JIS K7136: 2000.

Furthermore, the ionomer resin particulate obtained by the method of the present invention has high transparency even in a state where the ionomer resin particulate has absorbed water (after water absorption) because the salts originally present in the ionomer resin particulate have been sufficiently removed and are still contained in a small amount. The haze value in a state where the ionomer resin particulate has absorbed water (haze value after water absorption) is preferably 9.0% or less, more preferably 5.0% or less, still more preferably 4.0% or less, even still more preferably 3.0% or less, and particularly preferably 2.5% or less. Lower haze values after water absorption result in improved transparency after water absorption of the ionomer resin particulate, and thus, the lower limit value is not particularly limited, and may be, for example, 0.01% or more. The haze value after water absorption can be measured using a haze meter according to JIS K7136: 2000 by keeping the resin sheet formed from the ionomer resin particulate in a state where it is immersed in an ion exchanged water at 23°C for 300 hours, removing the resin sheet from the ion exchanged water, and using the resin sheet from which water absorbed on the surface is wiped as a test piece. For example, the measurement can be done by the methods described in Examples.

According to the studies by the present inventors, too high crystalline properties of ionomer resins tend to cause whitening in the ionomer resins, and thus to result in deteriorated transparency in a state where the ionomer resin has been slowly cooled to facilitate the crystallization of the resin (transparency after slow cooling). The ionomer resin particulate obtained according to the present invention, in which the total amount of the (meth)acrylic acid unit (A) and the neutralized (meth)acrylic acid unit (B) is 6mol% or more, is unlikely to undergo crystallization, and thus have high transparency even after slow cooling.

The haze value in a state where the ionomer resin particulate obtained by the method of the present invention has been slowly cooled to facilitate the crystallization of the resin (haze value after slow cooling) is preferably 5.0% or less, more preferably 4.0% or less, still more preferably 3.0% or less, even still more preferably 2.5% or less, and particularly preferably 2.0% or less. Lower haze values result in improved transparency of the ionomer resin, and thus, the lower limit value is not particularly limited, and may be, for example, 0.01% or more. The haze value after slow cooling can be obtained by placing a resin sheet formed from an ionomer resin particulate as an interlayer between two glass plates to prepare laminated glass, heating the laminated glass to 140°C, then slowly cooling the laminated glass from 140°C to 23°C at a rate of 0.1°C/min, and measuring the haze value with a haze meter according to JIS K7136: 2000.

In one embodiment of the present invention, the ionomer resin particulate of the present invention has low coloring index and is preferably colorless. The yellowness index (YI) of the ionomer resin particulate of the present invention is preferably 2.0 or less, more preferably 1.8 or less, still more preferably 1.5 or less, and particularly preferably 1.0 or less from the viewpoint of lowering the coloring property. Lower yellowness indexes (YI) result in reduced coloring property of the ionomer resin particulate, and thus, the lower limit value is not particularly limited, and may be, for example, 0 or more. The yellowness index (YI) can be measured using a differential colorimeter according to JIS Z8722: 2009.

### [Porous Ionomer Resin particulate]

The present invention also includes a porous ionomer resin particulate having a porosity of 60% or more. Since the porous ionomer resin particulate of the present invention is a granular ionomer resin having a porosity of 60% or more, the porous ionomer resin particulate is superior in drying easiness of the solvent in the ionomer resin particulate and in handleability. As for the porosity of the porous ionomer resin particulate of the present invention, the description regarding the porosity of the ionomer resin particulate obtained by the method of the present invention applies in the same manner.

In one embodiment of the present invention, the porous ionomer resin particulate of the present invention is preferably a pellet having a size of 1 to 8 mm from the viewpoint that the handleability can be improved. As for the shape and pellet size of the pellet of the porous ionomer resin particulate of the present invention, the descriptions regarding the shape and the pellet size of the pellet of the ionomer resin particulate obtained by the method of the present invention apply in the same manner.

In one embodiment of the present invention, the porous ionomer resin particulate of the present invention preferably has a median pore diameter of 0.05 to 1.2 µm from the viewpoint that the strength and the handleability of the particulate are likely to be improved. As for the median diameter of the pores of the porous ionomer resin particulate of the present invention, the description regarding the median diameter of the pores of the ionomer resin particulate obtained by the method of the present invention applies in the same manner.

In one embodiment of the present invention, the amount of the salt composed of a strong acid and a strong base in the porous ionomer resin particulate of the present invention is preferably 1000 mg/kg or less from the viewpoint that the transparency, especially the transparency after water absorption, of the ionomer resin particulate is likely to be improved. As for the type and amount of the salts in the porous ionomer resin particulate of the present invention, the descriptions regarding the type and amount of the salts in the ionomer resin particulate obtained by the method of the present invention apply in the same manner.

In one preferred embodiment of the present invention, the porous ionomer resin particulate of the present invention is preferably the ionomer resin particulate obtained by the method of the present invention, and the description regarding the ionomer resin particulate obtained by the method of the present invention described in the section of

### <Ionomer resin particulate> applies in the same manner.

### [Resin Composition]

Additives may be added as necessary to an ionomer resin particulate obtained by the method of the present invention or the porous ionomer resin particulate of the present invention to form a resin composition. The resin composition in the present invention comprises an ionomer resin particulate obtained by the method of the present invention or the porous ionomer resin particulate of the present invention and additives.

Examples of the additives that are optionally contained include ultraviolet absorbers, age resistors, antioxidants, heat stabilizers, light stabilizers, anti-agglutination agents, lubricants, mold release agents, polymer processing aids, antistatic agents, flame retardants, pigments, organic dyes, matting agents, and fluorophores. These additives may be used alone or in combination of two or more. Among these additives, ultraviolet absorbers, age resistors, antioxidants, heat stabilizers, light stabilizers, anti-agglutination agents, lubricants, mold release agents, polymer processing aids, and organic dyes are preferable.

The ultraviolet absorbers are compounds having ultraviolet absorbing capacity and considered as mainly serving to convert light energy to heat energy. Examples of the ultraviolet absorbers include benzophenones, benzotriazoles, triazines, benzoates, salicylates, cyanoacrylates, oxanilides, malonates, and formamidines. These may be used alone or in combination of two or more.

Benzotriazoles, which effectively prevent deterioration of the optical properties, such as coloring caused by UV ray irradiation, are preferred ultraviolet absorbers. Preferred examples of the benzotriazoles include 2-(2H-benzotriazole-2-yl)-4-(1,1,3,3-tetramethylbutyl)phenol (product name: TINUVIN329, produced by BASF SE), 2-(2H-benzotriazol-2-yl)-4,6-bis(1-methyl-1-phenylethyl)phenol (product name: TINUVIN234, produced by BASF SE), 2,2'-methylene bis[6-(2H-benzotriazol-2-yl)-4-t-octylphenol](product name: ADK STAB LA-31, produced by ADEKA), and 2-(5-octylthio-2H-benzotriazol-2-yl)-6-tert-butyl-4-methylphenol. These may be used alone or in combination of two or more.

Examples of the triazine ultraviolet absorbers include 2,4,6-tris(2-hydroxy-4-hexyloxy-3-methylphenyl)-1,3,5-triazine (product name: ADK STAB LA-F70, produced by ADEKA), and its analogs, hydroxyphenyl triazine ultraviolet absorbers (product name: TINUVIN477 and TINUVIN460, produced by BASF SE), and 2,4-diphenyl-6-(2-hydroxy-4-hexyloxyphenyl)-1,3,5-triazine. These may be used alone or in combination of two or more.

Examples of the age resistors are known materials. Specific examples of the age resistors include phenol compounds such as hydroquinone, hydroquinone monomethyl ether, 2,5-di-t-butylphenol, 2,6-di(t-butyl)-4-methylphenol, mono(or di- or tri-)(α-methylbenzyl)phenol; bisphenol compounds such as 2,2'-methylene bis(4-ethyl-6-t-butylphenol), 4,4'-butylidene bis(3-methyl-6-t-butylphenol), and 4,4'-thiobis(3-methyl-6-t-butylphenol); benzimidazole compounds such as 2-mercaptobenzimidazole and 2-mercaptomethylbenzimidazole; amine-ketone compounds such as 6-ethoxy-1,2-dihydro-2,2,4-trimethylquinoline, a reaction product of diphenylamine and acetone, and 2,2,4-trimethyl-1,2-dihydroquinoline polymer; aromatic secondary amine compounds such as N-phenyl-1-naphthylamine, alkylated diphenylamine, octylated diphenylamine, 4,4'-bis(α,α-dimethyl benzyl)diphenylamine, p-(p-toluene sulfonylamido)diphenylamine, and N,N'-diphenyl-p-phenylenediamine; and thiourea compounds such as 1,3-bis(dimethylaminopropyl)-2-thiourea and tributylthiourea. These may be used alone or in combination of two or more.

The antioxidants are effective in preventing oxidative degradation of resins by themselves in the presence of oxygen. Examples include phosphorus antioxidants, hindered phenolic antioxidants, and thioether antioxidants. These antioxidants may be used alone or in combination of two or more. Among them, phosphorus antioxidants and hindered phenolic antioxidants are preferable, and combinations of a phosphorus antioxidant and a hindered phenolic antioxidant are more preferable, from the viewpoint of the effect of preventing deterioration of the optical properties due to coloring.

When a phosphorus antioxidant and a hindered phenolic antioxidant are combined, the amount of the phosphorus antioxidant used: the amount of the hindered phenolic antioxidant used is preferably from 1 : 5 to 2 : 1, and more preferably from 1 : 2 to 1 : 1 in mass ratio.

Preferred examples of the phosphorus antioxidant include 2,2-methylene bis(4,6-di-t-butylphenyl)octylphosphite (product name: ADK STAB HP-10, produced by ADEKA), tris(2,4-di-t-butylphenyl)phosphite (product name: IRGAFOS168, produced by BASF SE), and 3,9-bis(2,6-di-t-butyl-4-methylphenoxy)-2,4,8,10-tetraoxa-3,9-diphosphaspiro[5.5]undecane (product name: ADK STAB PEP-36, produced by ADEKA). These may be used alone or in combination of two or more.

Preferred examples of the hindered phenolic antioxidant include pentaerythrityl-tetrakis[3-(3,5-di-t-butyl-4-hydroxyphenyl)propionate] (product name: IRGANOX1010, produced by BASF SE), and octadecyl-3-(3,5-di-t-butyl-4-hydroxyphenyl)propionate (product name: IRGANOX1076, produced by BASF SE). These may be used alone or in combination of two or more.

The heat stabilizers can prevent heat deterioration of resins by capturing polymer radicals produced when the resins are subjected to high temperatures under substantially oxygen-free conditions. Preferred examples of the heat stabilizers include 2-t-butyl-6-(3'-t-butyl-5'-methyl-hydroxybenzyl)-4-methylphenylacrylate (product name: SUMILIZER GM, produced by Sumitomo Chemical Co., Ltd.), and 2,4-di-t-amyl-6-(3',5'-di-t-amyl-2'-hydroxy-α-methylbenzyl)phenylacrylate (product name: SUMILIZER GS, produced by Sumitomo Chemical Co., Ltd.). These may be used alone or in combination of two or more.

The light stabilizers are compounds that are considered to serve to capture radicals produced mainly by photooxidation. Preferred examples of the light stabilizers include hindered amines such as compounds having a 2,2,6,6-tetraalkylpiperidine backbone. These may be used alone or in combination of two or more.

Examples of the anti-agglutination agents include salts or esters of fatty acids, esters of polyhydric alcohols, inorganic salts, inorganic oxides, and particulate resins. Preferred examples of the anti-agglutination agents include calcium stearate, calcium carbonate, calcium sulfate, magnesium sulfate, barium sulfate, silicon dioxide (product name: AEROSIL, produced by Evonik Industries AG), and particulate acrylic resins. These may be used alone or in combination of two or more.

Examples of the lubricants include stearates, behenates, stearamide, methylenebisstearamide, hydroxystearic acid triglyceride, paraffin waxes, ketone waxes, octyl alcohols, and hardened oils. These may be used alone or in combination of two or more.

Examples of the mold release agents include higher alcohols such as cetyl alcohol and stearyl alcohol; and glycerol higher fatty acid esters such as monoglyceride stearate and diglyceride stearate. These may be used alone or in combination of two or more.

The polymer processing aids to be used are usually polymer particles with particle sizes of from 0.05 to 0.5 µm, which can be produced by emulsion polymerization. The polymer particles may be monolayer particles composed of a polymer with single composition ratio and single limiting viscosity, or multilayer particles composed of two or more polymers with different composition ratios or limiting viscosities. These may be used alone or in combination of two or more. Especially preferred are particles with a two-layer structure having a polymer layer with a lower limiting viscosity as the inner layer and having a polymer layer with a higher limiting viscosity of 5 dl/g or more as the outer layer. The limiting viscosities of the polymer processing aids are preferably from 3 to 6 dl/g. Too small limiting viscosities tend to show little improvement effects on the moldability, while too large limiting viscosities tend to result in deterioration of the molding processability of copolymers.

Examples of the organic dyes that are preferably used are compounds that have a function to convert ultraviolet ray to visible ray. The organic dyes may be used alone or in combination of two or more.

Examples of the fluorophores include fluorescent pigments, fluorescent dyes, fluorescent white dyes, fluorescent whitening agents, and fluorescent bleaching agents. These may be used alone or in combination of two or more.

The amounts of the various additives can be selected as appropriate without impairing the effects of the invention, and the total amount of the various additives is preferably 7% by mass or less, more preferably 5% by mass or less, and still more preferably 4% by mass or less based on the total amount of the resin composition.

In one embodiment of the present invention, the amount of the ionomer resin particulate obtained by the method of the present invention or the porous ionomer resin particulate of the present invention is preferably 90% by mass or more, more preferably 95% by mass or more, still more preferably 98% by mass or more, and even still more preferably 99% by mass or more, and preferably 100% by mass or less, and more preferably 99.99% by mass or less based on the total mass of the resin composition from the viewpoint that the transparency and the handleability are likely to be improved.

The various additives may be added during producing of the ionomer resin particulate, after producing of the ionomer resin particulate, or during producing of a resin sheet as described later.

The resin composition in the present invention may be made into a granular form such as pellet in order to enhance convenience in storage, transportation, or molding. When the resin composition is pelletized, pellets can be obtained, for example, by cutting a strand obtained by melt extrusion. The temperature of resins or resin compositions during melt extrusion in the case of pelletization by a melt extrusion method is preferably 150°C or higher, and more preferably 170°C or higher from the viewpoint that discharge from an extruder is likely to be stabilized. The temperature is preferably 250°C or lower, and more preferably 230°C or lower from the viewpoint of preventing the pyrolytic deterioration of resins. Resin pelletization by melt extrusion as described above for the ionomer resin particulate of the present invention and the resin composition in the present invention produces fewer volatile substances and thus less odor, so that the working environment is unlikely to be deteriorated.

### [Resin Sheet]

The present invention also encompasses a resin sheet including one or more layer comprising the porous ionomer resin particulate of the present invention as a resin component. Since the resin sheet of the present invention includes a layer containing the porous ionomer resin particulate of the present invention as a resin component, it is superior in transparency.

The resin sheet of the present invention includes one or more layer comprising the porous ionomer resin particulate of the present invention as a resin component (hereinafter, also referred to as layer (x)). The layer (x) is a layer comprising the porous ionomer resin particulate of the present invention and optional additives.

The resin sheet of the present invention may comprise a layer (x) only, or a laminate comprising at least one layer (x). The laminate may be, for example, but not limited to, a laminate comprising two or more layers (x), or a laminate comprising one or more layer (x) and one or more other layer. The layer (x) or the other layer is multiple, the resin particulates or the resin compositions that constitute the layers may be the same or different.

Examples of the other layer include layers comprising well-known resins. Examples of the resin that can be used include polyethylene, polypropylene, polyvinyl chloride, polystyrene, polyurethane, polytetrafluoroethylene, acrylic resins, polyamide, polyacetal, polycarbonate, polyesters such as polyethylene terephthalate and polybutyrene terephthalate, cyclic polyolefin, polyphenylene sulfide, polytetrafluoroethylene, polysulfone, polyether sulfone, polyalylate, liquid crystal polymers, polyimide, and thermoplastic elastomers. The other layer may also contain, as necessary, one or more of the additives described above, as well as of additives such as plasticizers, pigments, dyes, heat shield materials (e.g., inorganic heat shield particles or organic heat shield materials having infrared ray absorbing capacity), and functional inorganic compounds.

In one preferred embodiment of the present invention, the resin sheet of the present invention has an uneven structure on its surface formed by a conventionally known method, such as melt fractures and embosses, from the viewpoint of excellent foam release properties during thermocompression bonding of the resin sheet and a substrate. The shapes of the melt fractures and embosses may be selected as appropriate from conventionally known shapes.

The thickness of one layer (x) in the resin sheet of the present invention is preferably 0.1 mm or more, more preferably 0.2 mm or more, still more preferably 0.3 mm or more, and particularly preferably 0.4 mm or more, and is preferably 5 mm or less, more preferably 4 mm or less, still more preferably 2 mm or less, and particularly preferably 1 mm or less. When the layer (x) in the resin sheet is multiple, the thickness of one of the multiple layers (x) in the resin sheet may be the same or different.

The thickness of the resin sheet of the present invention is preferably 0.1 mm or more, more preferably 0.2 mm or more, still more preferably 0.3 mm or more, still more preferably 0.4 mm or more, still more preferably 0.5 mm or more, still more preferably 0.6 mm or more, even still more preferably 0.7 mm or more, and particularly preferably 0.75 mm or more, and is preferably 20 mm or less, more preferably 15 mm or less, still more preferably 10 mm or less, still more preferably 5 mm or less, still more preferably 4 mm or less, still more preferably 2 mm or less, and even still more preferably 1 mm or less.

The thickness of the resin sheet is measured by a conventionally known method, for example, using a contact or non-contact thickness gauge. The resin sheet may be rolled up into a roll or in individual sheets.

In one preferred embodiment of the present invention, the resin sheet of the present invention exhibits the same values as the storage elastic modulus at 50°C, the haze value, the haze value after water absorption, the haze value after slow cooling, and the yellowness index of the ionomer resin particulate obtained by the method of the present invention described in the section of <Ionomer resin particulate>.

Preferably, the resin sheet of the present invention has lower water content from the viewpoint that it is less likely to undergo foaming during the produce of a laminated glass. The water content of the resin sheet is preferably 1% by mass or less, more preferably 0.5% by mass or less, still more preferably 0.02% by mass or less, and particularly preferably 0.01% by mass or less. The amount can be measured by coulometric titration.

The method of producing the resin sheet of the present invention is not particularly limited. For example, the porous ionomer resin particulate of the present invention or the resin composition in the present invention is kneaded homogeneously, and then can be subjected to known film-formation methods, such as extrusion, calender, press, solution casting, melt casting, and blown film extrusion methods, to produce a layer (x). The layer (x) alone may be used as the resin sheet. Alternatively, as desired, two or more layers (x), or one or more layer (x) and one or more other layer may be laminated by press molding or other methods to form a laminated resin sheet, or two or more layers (x), or one or more layer (x) and one or more other layer may be molded by a co-extrusion method to form a laminated resin sheet. The layer (x) or the other layer is multiple, the resin compositions that constitute the layers may be the same or different.

Among known film-formation methods, methods of producing resin sheets using an extruder are suitably used. The resin temperature during extrusion is preferably 150°C or higher, and more preferably 170°C or higher from the viewpoint that discharge of the resin from an extruder is likely to be stabilized and that mechanical troubles are likely to be reduced. The resin temperature during extrusion is preferably 250°C or lower, and more preferably 230°C or lower from the viewpoint that resin decomposition and resin deterioration accompanied by decomposition are likely to be reduced. For efficient removal of volatile materials, volatile materials are preferably removed by vacuum from a vent port of an extruder.

### [Laminated Glass Interlayer and Laminated Glass]

The resin sheet of the present invention can be suitably used as a laminated glass interlayer (also referred simply to as "interlayer"). Thus, the present invention encompasses a laminated glass interlayer comprising the resin sheet of the present invention. The present invention also encompasses laminated glass comprising two glass plates, and the laminated glass interlayer according to the present invention positioned between the two glass plates. The laminated glass of the present invention has a laminated glass interlayer comprising the resin sheet, and thus can exhibit excellent transparency.

Examples of the glass plate that can be used to be laminated with the interlayer of the present invention include inorganic glass such as float plate glass, polished plate glass, figured plate glass, wire plate glass, and heat absorbing plate glass, as well as conventionally known organic glass such as polymethyl methacrylate and polycarbonate. These glass plates may be colorless or colored. These may be used singly or two or more thereof may be used in combination. The thickness of one glass plate is preferably 100 mm or less, and the thicknesses of two glass plates may be the same or different.

Laminated glass comprising the resin sheet of the present invention placed between two sheets of glass can be produced by a conventionally known method. The method may be, for example, a method using a vacuum laminator, a vacuum bag, a vacuum ring, or a nip roll. Alternatively, a method comprising temporary bonding by the above method and subsequent autoclaving for full bonding may be used.

When a vacuum laminator is used, a glass plate, an interlayer, and optional layers (e.g., an adhesive resin layer) can be laminated, for example, under reduced pressure of 1 × 10⁻⁶ to 1 × 10⁻¹MPa, at 60 to 200°C, especially at 80 to 160°C, to produce laminated glass. The method using a vacuum bag or a vacuum ring is described, for example, in EP 1235683 B1, and a glass plate, an interlayer, and optional layers can be laminated under a pressure of about 2 × 10⁻² to 3 × 10⁻² MPa, at 100 to 160°C to produce laminated glass.

The production method using a nip roll may be, for example, a method comprising laminating a glass plate, an interlayer, and optional layers, degassing the laminate at a temperature lower than the flow beginning temperature of the interlayer with rolls, and press-bonding the laminate at a temperature near the flow beginning temperature. Specifically, the method may be, for example, a method comprising heating the laminate to 30 to 70°C with an infrared heater or the like, degassing it with rolls, heating it to 50 to 120°C, and then press-bonding it with rolls.

In the case of press bonding using the method as described above followed by introduction into an autoclave for further press bonding, the operating conditions of the autoclave step are selected as appropriate based on the thickness and structure of the laminated glass. For example, treatment under a pressure of 0.5 to 1.5 MPa at 100 to 160°C for 0.5 to 3 hours is preferable.

The ionomer resin particulate of the present invention and the resin sheet of the present invention have high transparency and high adhesiveness to glass, so that the laminated glass of the present invention has superior transparency. In one embodiment of the present invention, the haze value of the laminated glass of the present invention is preferably 1.0% or less, more preferably 0.8% or less, and still more preferably 0.5% or less. Lower haze values result in improved transparency of the laminated glass and thus, the lower limit value is not particularly limited, and may be, for example, 0.01%. The haze value of the laminated glass is measured using a haze meter according to JIS K7136: 2000.

The laminated glass of the present invention is also superior in transparency after slow cooling. Transparency after slow cooling can be evaluated using a haze value after slow cooling. The haze value after slow cooling of the laminated glass of the present invention is preferably 5.0% or less, more preferably 4.0% or less, still more preferably 3.0% or less, even still more preferably 2.5% or less, and particularly preferably 2.0% or less. Lower haze values result in improved transparency of the laminated glass and thus, the lower limit value is not particularly limited, and may be, for example, 0.01% or more. The haze value after slow cooling of a laminated glass can be determined by heating the laminated glass to 140°C, then slowly cooling the laminated glass from 140°C to 23°C at a rate of 0.1°C/min, and measuring the haze value with a haze meter according to JIS K7136: 2000, and it can be determined, for example, by the method described in Examples.

Preferably, the laminated glass of the present invention is less colored and is colorless whenever possible. The yellowness index (YI) of the laminated glass of the present invention is preferably 3.0 or less, more preferably 2.0 or less, still more preferably 1.5 or less, and particularly preferably 1.0 or less, and preferably may be 0 or more. The yellowness index (YI) can be measured using a differential colorimeter according to JIS Z8722.

The adhesion between the glass plate and the interlayer in the laminated glass of the present invention is measured, for example, by a compression shear strength test described in WO 1999-058334 A2. The compression shear strength is preferably 15 MPa or more, more preferably 20 MPa or more, and particularly preferably 25 MPa or more, from the viewpoint that the adhesion is likely to be improved. The compression shear strength may be 50 MPa or less from the viewpoint that the penetration resistance of the laminated glass is likely to be improved.

As described above, the resin sheet including one or more layers comprising the ionomer resin particulate of the present invention as a resin component is useful as a laminated glass interlayer. The laminated glass interlayer is especially useful as an interlayer of laminated glass for structural materials (for facade) because it has excellent adhesiveness to glass or other substrates, transparency, and self-standing properties.

Not only as an interlayer of laminated glass for structural materials, the laminated glass of the present invention can also be suitably used in automotive front windshields, automotive side windshields, automotive sunroofs, automotive rear windshields, head up display glass, laminates for exterior walls and roofs, panels, doors, windows, walls, roofs, sunroofs, sound-insulating walls, display windows, balconies, parapets and other building materials, partition glass materials for meeting room, and solar panels.

### EXAMPLES

The present invention will be described in detail below with reference to examples and comparative examples but is not limited to the examples.

### [Amounts of Monomeric Units of Crude Ionomer Resin and Raw Material Resin]

Ionomer resin pellets obtained in Examples and Comparative Examples were analyzed to determine the amounts of the monomeric units, a (meth)acrylic acid unit (A), a neutralized (meth)acrylic acid unit (B), an ethylene unit (C), and a (meth)acrylic acid ester unit (D), in the ionomer resin pellets as described below. The amounts described above correspond to the amounts of the monomeric units of the crude ionomer resins in Examples and Comparative Examples.

The ionomer resin pellets obtained in Examples and Comparative Examples were dissolved in a mixed solvent of dehydrated toluene/dehydrated acetic acid (75/25% by mass), reacted at 100°C for 2 hours, and reprecipitated in a mixed solvent of acetone/water (80/20% by mass) to convert neutralized (meth)acrylic acid units (B) to (meth)acrylic acid units (A). The obtained resins were sufficiently washed with water and dried. Then, the dried resins were subjected to the following (1) to (3).
(1) Component analysis was performed on the monomeric units constituting the resins by pyrolysis GC-MS.
(2) The acid values of the resins according to JIS K0070: 1992 were measured.
(3) ¹H-NMR (400 MHz, JEOL Ltd.) measurement was performed on the resins using a mixed solvent of deuterated toluene and deuterated methanol.
(4) The ionomer resin pellets obtained in Examples and Comparative Examples were subjected to microwave digestion pretreatment with nitric acid, and then the types and amounts of the metal ions of the neutralized (meth)acrylic acid units (B) were determined by ICP optical emission spectrometry (Thermo Fisher Scientific iCAP6500Duo).

Based on (1) described above, the types and structures of the (meth)acrylic acid ester unit (D) and the (meth)acrylic acid unit (A) were identified. Based on the information, as well as on the information from (2) and (3) described above, the ratio of the ethylene unit (C)/the (meth)acrylic acid ester unit (D)/(the total of the (meth)acrylic acid unit (A) and the neutralized (meth)acrylic acid unit (B)) was determined. In addition, based on the information from (4) described above, the ratio of the ethylene unit (C)/the (meth)acrylic acid ester unit (D)/the (meth)acrylic acid unit (A)/the neutralized (meth)acrylic acid unit (B) was determined.

The amounts of the monomeric units of the ethylene-(meth)acrylic acid ester copolymer (X) as a raw material were determined by dissolution in deuterated toluene or deuterated THF, followed by measurement by ¹H-NMR (400MHz, JEOL Ltd.).

### [Melt Flow Rate (MFR) of Raw Material Resin]

The melt flow rates of the raw material resins used in Examples and Comparative Examples were measured according to JIS K7210-1: 2014. Specifically, the resins were melted in a cylinder, and extruded from a die positioned at the bottom of the cylinder and having a nominal hole size of 2.095 mm at 190°C and at a load of 2.16 kg, and the amounts of the resin extruded per 10 minutes (g/10 min) were measured.

### [Porosity of pellet and median diameter of pores]

The pellets obtained in Examples and Comparative Examples were freeze-dried at -80°C, then 0.5 g of the pellets were taken in a standard 5 cc powder cell (stem volume: 0.4 cc), and the porosity of pellets and the median diameter of pores were measured under an initial pressure of 2.6 kPa using a Micromeritics pore distribution analyzer (AutoPore V9620 manufactured by Shimadzu Corporation). The median diameter of pores is a median diameter (d50) for all pores with a pore diameter in the range of 0.005 to 100 µm in Log differential pore volume distribution. The mercury parameters were set to a mercury contact angle of 130 degrees and a mercury surface tension of 485 hynes/cm.

### [Pellet Size]

The pellet size of the pellets obtained in Examples and Comparative Examples was calculated by the following procedure.

Ten pellets were randomly extracted from the obtained pellets, and for each of the ten pellets, the height of the pellet as the X-axis length (Lx), the length of the longest part among the diameters of the bottom face of the pellet as the Y-axis length (Ly), and the length of the shortest part among the diameters of the bottom face of the pellet as the Z-axis length (Lz) were measured with a micrometer. The average value ((Lx + Ly + Lz)/3) of the lengths of the X-axis, the Y-axis, and the Z-axis of each pellet was calculated. The arithmetic average value of the average values of the X-axis, Y-axis, and Z-axis lengths of the respective pellets was defined as a pellet size.

### [Handleability]

The handleability of the pellets obtained in Examples and Comparative Examples was evaluated according to the following criteria depending on the strength and the possibility of pelletization of the resin extruded into a poor solvent through a die.

Evaluation A: The extruded resin was in the form of a strand. The strand did not break even when it was lifted, and was able to be pelletized.

Evaluation C: The extruded resin was in the form of a strand. The strand broke when lifted, but was able to be pelletized.

Evaluation X: The extruded resin did not form a strand and was not able to be pelletized.

### [Amount of Salt Composed of Strong Acid and Strong Base (Amount of Remaining Inorganic Salt)]

After 0.1 g of each of the crude ionomer resins and the ionomer resin pellets obtained in Examples and Comparative Examples was weighed out, 10 mL of ultrapure water was added thereto, and the mixture was heated at 90°C for 1 hour. Thereafter, the resulting product was allowed to cool and filtered through a filter with 0.45-µm mesh size. The filtrate obtained by the filtration was used as a sample solution and measured by ion chromatography (Shimadzu Corporation) under the conditions described below. Based on the peak area obtained by the measurement, the amount of chloride ions or nitrate ions was determined. The amount of chloride ions or nitrate ions was converted to the amount of sodium salts, thereby determining the amount of remaining inorganic salts.

### (Measurement Conditions)

Eluent: mixed solution of an aqueous sodium carbonate solution (0.6 mmol/L) and an aqueous sodium bicarbonate solution (12 mmol/L);
Flow rate: 1.0 mL/min;
Column temperature: 40°C;
Column: IC-SA2 (250 L × 4.0)

### [Transparency after water absorption (haze value after water absorption)]

The ionomer resin pellets obtained in Examples and Comparative Examples were each melt-kneaded at 210°C, and the melt-kneaded product was compression-molded under heating at 210°C and a pressure of 4.9 MPa (50 kgf/cm²) for 5 minutes to obtain a resin sheet with a thickness of 0.8 mm. The obtained resin sheet was cut out into 50 mm square pieces, and the cut-out sample was continued to be immersed in ion exchanged water at 23°C for 300 hours to obtain a water-absorbed sample. After wiping water attached to the surface of the water-absorbed sample removed from the ion exchanged water, the haze value of the water-absorbed sample was measured using a haze meter HZ-1 (Suga Test Instruments Co., Ltd.) according to JIS K7136: 2000.

### [Transparency after slow cooling (haze value after slow cooling)]

A resin sheet obtained in the same manner as the method described above was sandwiched between two sheets of float glass with a thickness of 2.7 mm. Using a vacuum laminator (1522N, produced by Nisshinbo Mechatronics Inc.), the inside of which was vacuumed at 100°C for 1 minute, the laminate was pressed at 30 kPa for 5 minutes while maintaining the degree of vacuum and the temperature to obtain a temporally bonded body. The obtained temporally bonded body was introduced into an autoclave and processed at 140°C and 1.2MPa for 30 minutes to obtain laminated glass.

The obtained laminated glass was heated to 140°C, and then slowly cooled to 23°C at a rate of 0.1°C/min. The haze value of the laminated glass after the slow cooling operation was measured using a haze meter HZ-1 (Suga Test Instruments Co., Ltd.) according to JIS K7136: 2000.

### [Raw Material Resin]

the methyl methacrylate (MMA) modified amounts, the ethyl acrylate (EA) modified amounts and the MFRs, of the ethylene-(meth)acrylic acid ester copolymers (X) used as raw materials in Examples and Comparative Examples are shown in Table 1.
"ACRYFT" (registered trademark) WK307 produced by Sumitomo Chemical Co., Ltd. was used as EMMA1, and NUC-6070 produced by NUC Corporation was used as EEA1.

**[Table 1]**

| | MMA or EA modified amount | | MFR |
|---|---|---|---|
| | mass% | mol% | g/10 min |
| EMMA1 | 25 | 8.5 | 7 |
| EEA1 | 25 | 8.5 | 250 |

### [Example 1]

To a SUS pressure vessel, 100 parts by mass of EMMA1 in Table 1 was introduced, and 233 parts by mass of toluene was added and stirred at 60°C under an increased pressure of 0.02 MPa to dissolve EMMA1. To the obtained solution, 96 parts by mass of a solution of sodium hydroxide (20% by mass) in methanol was added, and the mixture was stirred at 100°C for 4 hours to saponify EMMA1, thereby converting some of the methyl methacrylate units to sodium methacrylate units. Then, after cooling the solution to 50°C, 92 parts by mass of nitric acid (30% by mass) was added and stirred at 50°C for 1 hour to convert some of the sodium methacrylate units to methacrylic acid, thereby obtaining a crude ionomer resin solution (1). The degree of saponification of the crude ionomer resin was 96%, and the degree of neutralization was 24%.

The temperature of the obtained crude ionomer resin solution (1) was raised to 60°C, and 97 parts by mass of toluene and 32 parts by mass of methanol were added to dilute the solution such that the crude ionomer resin concentration became 15% by mass. The mixture of the crude ionomer resin and the solvent at 60°C obtained as described above was extruded into water at 20°C through a die having a diameter of 1 mm attached to the bottom of a pressure-resistant container and was solidified there, affording a strand-shaped resin. The obtained strand could be wound by hand, and the handleability was evaluated as A. The obtained strand was cut with a FAN-CUTTER (manufactured by Hoshi Plastic Co., Ltd.), affording resin pellets 1-1 having a size of 3 mm.

Next, 100 parts by mass of the obtained resin pellets and 600 parts by mass of a mixed solvent of water/methanol (50/50% by mass) were mixed. Slurries obtained by the mixing process were stirred at 40°C for 1 hour, and then resin pellets were collected by filtration at room temperature. The resin pellets were further washed with a mixed solvent of water/methanol (50/50% by mass) three times, affording washed ionomer resin pellets 1-2. The obtained ionomer resin pellets 1-2 had a porosity, a median pore diameter, and a pellet size equal to those of the resin pellets 1-1.

### [Example 2]

The crude ionomer resin solution (1) obtained in Example 1 was adjusted to 50°C, and 342 parts by mass of toluene and 114 parts by mass of methanol were added thereto to dilute the solution such that the crude ionomer resin concentration became 10% by mass. The mixture of the crude ionomer resin and the solvent at 50°C obtained as described above was extruded into water at 20°C through a die having a diameter of 1 mm attached to the bottom of a pressure-resistant container and was solidified there, affording a strand-shaped resin. The obtained strand could be wound by hand, and the handleability was evaluated as A. The obtained strand was cut into 3 mm-sized resin pellets 2-1.

Next, the obtained resin pellets 2-1 were washed in the same manner as in Example 1, affording washed ionomer resin pellets 2-2. The obtained ionomer resin pellets 2-2 had a porosity, a median pore diameter, and a pellet size equal to those of the resin pellets 2-1.

### [Example 3]

To a SUS pressure vessel, 100 parts by mass of EMMA1 in Table 1 was introduced, and 233 parts by mass of toluene was added and stirred at 60°C under an increased pressure of 0.02 MPa to dissolve EMMA1. To the obtained solution, 96 parts by mass of a solution of sodium hydroxide (20% by mass) in methanol was added, and the mixture was stirred at 100°C for 4 hours to saponify EMMA1, thereby converting some of the methyl methacrylate units to sodium methacrylate units. Then, after cooling the solution to 50°C, 81 parts by mass of hydrochloric acid (20% by mass) was added and stirred at 50°C for 1 hour to convert some of the sodium methacrylate units to methacrylic acid, thereby obtaining a crude ionomer resin solution (2). The degree of saponification of the crude ionomer resin was 96%, and the degree of neutralization was 22%.

To the obtained crude ionomer resin solution (2) were added 351 parts by mass of toluene and 117 parts by mass of methanol, so that the solution was diluted such that the crude ionomer resin concentration became 10% by mass. The mixture of the crude ionomer resin and the solvent at 50°C obtained as described above was extruded into water at 20°C through a die having a diameter of 2 mm attached to the bottom of a pressure-resistant container and was solidified there, affording a strand-shaped resin. The obtained strand could be wound by hand, and the handleability was evaluated as A. The obtained strand was cut with a FAN-CUTTER (manufactured by Hoshi Plastic Co., Ltd.), affording resin pellets 3-1 having a size of 5 mm.

Next, the obtained resin pellets 3-1 were washed in the same manner as in Example 1, affording washed ionomer resin pellets 3-2. The obtained ionomer resin pellets 3-2 had a porosity, a median pore diameter, and a pellet size equal to those of the resin pellets 3-1.

### [Example 4]

The crude ionomer resin solution (2) obtained in Example 3 was adjusted to 60°C, and 106 parts by mass of toluene and 35 parts by mass of methanol were added thereto to dilute the solution such that the crude ionomer resin concentration became 15% by mass. The mixture of the crude ionomer resin and the solvent at 60°C obtained as described above was extruded into water at 20°C through a die having a diameter of 1.5 mm attached to the bottom of a pressure-resistant container and was solidified there, affording a strand-shaped resin. The obtained strand could be wound by hand, and the handleability was evaluated as A. The obtained strand was cut, affording 4 mm-sized resin pellets 4-1.

Next, the obtained resin pellets 4-1 were washed in the same manner as in Example 1, affording washed ionomer resin pellets 4-2. The obtained ionomer resin pellets 4-2 had a porosity, a median pore diameter, and a pellet size equal to those of the resin pellets 4-1.

### [Example 5]

The crude ionomer resin solution (1) obtained in Example 1 was adjusted to 50°C, and 97 parts by mass of toluene and 32 parts by mass of methanol were added thereto to dilute the solution such that the crude ionomer resin concentration became 15% by mass. The mixture of the crude ionomer resin and the solvent at 50°C obtained as described above was extruded into methanol at 5°C through a die having a diameter of 1 mm attached to the bottom of a pressure-resistant container and was solidified there, affording a strand-shaped resin. The obtained strand could be wound by hand, and the handleability was evaluated as A. The obtained strand was cut, affording 3 mm-sized resin pellets 5-1.

Next, the obtained resin pellets 5-1 were washed in the same manner as in Example 1, affording washed ionomer resin pellets 5-2. The obtained ionomer resin pellets 5-2 had a porosity, a median pore diameter, and a pellet size equal to those of the resin pellets 5-1.

### [Example 6]

The crude ionomer resin solution (2) obtained in Example 3 was adjusted to 50°C, and 106 parts by mass of toluene and 35 parts by mass of methanol were added thereto to dilute the solution such that the crude ionomer resin concentration became 15% by mass. The mixture of the crude ionomer resin and the solvent at 50°C obtained as described above was extruded into water at 5°C through a die having a diameter of 1 mm attached to the bottom of a pressure-resistant container and was solidified there, affording a strand-shaped resin. The obtained strand could be wound by hand, and the handleability was evaluated as A. The obtained strand was cut, affording 3 mm-sized resin pellets 6-1.

Next, the obtained resin pellets 6-1 were washed in the same manner as in Example 1, affording washed ionomer resin pellets 6-2. The obtained ionomer resin pellets 6-2 had a porosity, a median pore diameter, and a pellet size equal to those of the resin pellets 6-1.

### [Example 7]

To a SUS pressure vessel, 100 parts by mass of EEA1 in Table 1 was introduced, and 233 parts by mass of toluene was added and stirred at 60°C under an increased pressure of 0.02 MPa to dissolve EEA1. To the obtained solution, 96 parts by mass of a solution of sodium hydroxide (20% by mass) in methanol was added, and the mixture was stirred at 100°C for 4 hours to saponify EEA1, thereby converting some of the ethyl acrylate units to sodium acrylate units. Then, after cooling the solution to 50°C, 93 parts by mass of nitric acid (30% by mass) was added and stirred at 50°C for 1 hour to convert some of the sodium acrylate units to acrylic acid, thereby obtaining a crude ionomer resin solution (3). The degree of saponification of the crude ionomer resin was 96%, and the degree of neutralization was 23%.

The obtained crude ionomer resin solution was cooled to 40°C, and 1020 parts by mass of toluene and 340 parts by mass of methanol were added thereto to dilute the solution such that the crude ionomer resin concentration became 5% by mass. The mixture of the crude ionomer resin and the solvent at 40°C obtained as described above was extruded into water at 20°C through a die having a diameter of 1 mm attached to the bottom of a pressure-resistant container and was solidified there, affording a strand-shaped resin. The obtained strand was easily cut when being wound by hand, and the handleability was evaluated as C. The obtained strand was cut with a FAN-CUTTER (manufactured by Hoshi Plastic Co., Ltd.), affording resin pellets 7-1 having a size of 3 mm.

Next, the obtained resin pellets 7-1 were washed in the same manner as in Example 1, affording washed ionomer resin pellets 7-2. The obtained ionomer resin pellets 7-2 had a porosity, a median pore diameter, and a pellet size equal to those of the resin pellets 7-1.

### [Example 8]

The crude ionomer resin solution (3) obtained in Example 7 was cooled to 40°C, and 80 parts by mass of toluene and 27 parts by mass of methanol were added thereto to dilute the solution such that the crude ionomer resin concentration became 15% by mass. The mixture of the crude ionomer resin and the solvent at 40°C obtained as described above was extruded into water at 20°C through a die having a diameter of 1 mm attached to the bottom of a pressure-resistant container and was solidified there, affording a strand-shaped resin. The obtained strand could be wound by hand, and the handleability was evaluated as A. The obtained strand was cut with a FAN-CUTTER (manufactured by Hoshi Plastic Co., Ltd.), affording resin pellets 8-1 having a size of 3 mm.

Next, the obtained resin pellets 8-1 were washed in the same manner as in Example 1, affording washed ionomer resin pellets 8-2. The obtained ionomer resin pellets 8-2 had a porosity, a median pore diameter, and a pellet size equal to those of the resin pellets 8-1.

### [Example 9]

To a SUS pressure vessel, 100 parts by mass of EMMA1 in Table 1 was introduced, and 233 parts by mass of toluene was added and stirred at 60°C under an increased pressure of 0.02 MPa to dissolve EMMA1. To the obtained solution, 96 parts by mass of a solution of sodium hydroxide (20% by mass) in methanol was added, and the mixture was stirred at 100°C for 4 hours to saponify EMMA1, thereby converting some of the methyl methacrylate units to sodium methacrylate units. Then, after cooling the solution to 50°C, 95 parts by mass of hydrochloric acid (20% by mass) was added and stirred at 50°C for 1 hour to convert some of the sodium methacrylate units to methacrylic acid, thereby obtaining a crude ionomer resin solution (4). The degree of saponification of the crude ionomer resin was 96%, and the degree of neutralization was 20%.

To the obtained crude ionomer resin solution (4) were added 96 parts by mass of toluene and 32 parts by mass of methanol, so that the solution was diluted such that the crude ionomer resin concentration became 15% by mass. The mixture of the crude ionomer resin and the solvent at 50°C obtained as described above was extruded into water at 20°C through a die having a diameter of 2 mm attached to the bottom of a pressure-resistant container and was solidified there, affording a strand-shaped resin. The obtained strand could be wound by hand, and the handleability was evaluated as A. The obtained strand was cut with a FAN-CUTTER (manufactured by Hoshi Plastic Co., Ltd.), affording resin pellets 9-1 having a size of 3 mm.

Next, the obtained resin pellets 9-1 were washed in the same manner as in Example 1, affording washed ionomer resin pellets 9-2. The obtained ionomer resin pellets 9-2 had a porosity, a median pore diameter, and a pellet size equal to those of the resin pellets 9-1.

### [Comparative Example 1]

The crude ionomer resin solution (1) obtained in Example 1 was adjusted to 50°C. At the crude ionomer resin concentration of 19% by mass, the crude ionomer resin solution (1) was extruded into water at 20°C through a die having a diameter of 1 mm attached to the bottom of a pressure-resistant container and was solidified there, affording a strand-shaped resin. The obtained strand could be wound by hand, and the handleability was evaluated as A. The obtained strand was cut, affording 3 mm-sized resin pellets 1'-1.

Next, the obtained resin pellets 1'-1 were washed in the same manner as in Example 1, affording washed ionomer resin pellets 1'-2. The obtained ionomer resin pellets 1'-2 had a porosity, a median pore diameter, and a pellet size equal to those of the resin pellets 1'-1.

### [Comparative Example 2]

The crude ionomer resin solution (2) obtained in Example 3 was adjusted to 70°C, and 109 parts by mass of toluene and 36 parts by mass of methanol were added thereto to dilute the solution such that the crude ionomer resin concentration became 15% by mass. The mixture of the crude ionomer resin and the solvent at 70°C obtained as described above was extruded into water at 20°C through a die having a diameter of 1 mm attached to the bottom of a pressure-resistant container and was solidified there. However, the resin foamed and a strand-shaped resin could not be obtained. The handleability was evaluated as X.

### [Comparative Example 3]

The crude ionomer resin solution (2) obtained in Example 3 was adjusted to 50°C, and 109 parts by mass of toluene and 36 parts by mass of methanol were added thereto to dilute the solution such that the crude ionomer resin concentration became 15% by mass. The mixture of the crude ionomer resin and the solvent at 50°C obtained as described above was extruded into water at 70°C through a die having a diameter of 1 mm attached to the bottom of a pressure-resistant container and was attempted to solidify there. However, the resin was mingled in water and a strand-shaped resin could not be obtained. The handleability was evaluated as X.

### [Comparative Example 4]

The crude ionomer resin solution (3) obtained in Example 7 was adjusted to 50°C, and 315 parts by mass of toluene and 105 parts by mass of methanol were added thereto to dilute the solution such that the crude ionomer resin concentration became 10% by mass. The mixture of the crude ionomer resin and the solvent at 50°C obtained as described above was extruded into water at 20°C through a die having a diameter of 1 mm attached to the bottom of a pressure-resistant container and was solidified there, affording a strand-shaped resin. The obtained strand could be wound by hand, and the handleability was evaluated as A. The obtained strand was cut, affording 10 mm-sized resin pellets 2'-1.

Next, the obtained resin pellets 2'-1 were washed in the same manner as in Example 1, affording washed ionomer resin pellets 2'-2. The obtained ionomer resin pellets 2'-2 had a porosity, a median pore diameter, and a pellet size equal to those of the resin pellets 2'-1.

The pellets obtained in Examples and Comparative Examples were all columnar. The washed ionomer resin pellets obtained in Examples and Comparative Examples were vacuum-dried for 8 hours or more, and then analyzed and evaluated. The analysis results and evaluation results are shown in Table 2. In the table, "Tol" represents toluene, and "MeOH" represents methanol. In addition, the amounts (parts by mass) of the crude ionomer resins in the table each represent the amount of a crude ionomer resin obtained from 100 parts by mass of a raw material resin, and the amounts (parts by mass) of the salts in the crude ionomer resins each represent the amount of the salts contained in a crude ionomer resin obtained from 100 parts by mass of a raw material resin.

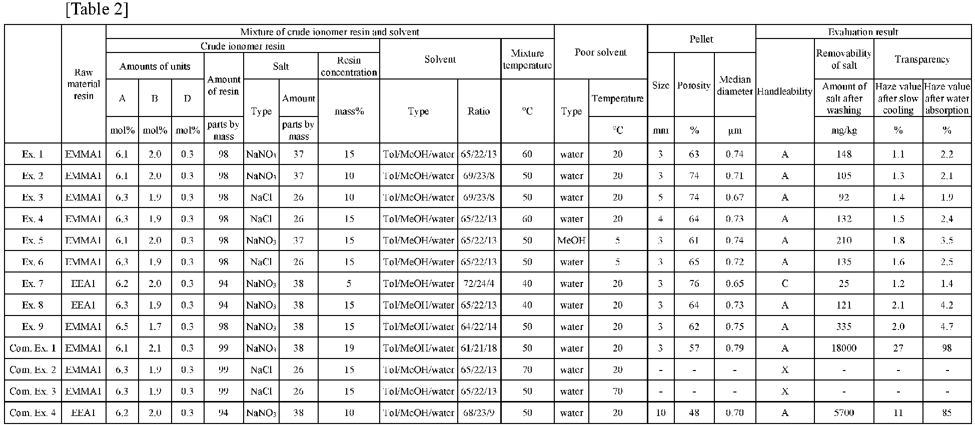

As shown in Table 2, the ionomer resin pellets obtained in Example 1 to 9 had a low salt amount and were superior in transparency and handleability. On the other hand, the ionomer resin pellets obtained in Comparative Examples 1 and 4 had low transparency. In Comparative Examples 2 and 3, ionomer resin pellets having good handleability were not obtained.

## Claims

1. A method of producing an ionomer resin particulate, comprising a step of extruding a mixture comprising a crude ionomer resin and a solvent, cooling the extruded mixture, and solidifying the crude ionomer resin in the mixture to obtain a porous particulate, wherein the crude ionomer resin comprises a (meth)acrylic acid unit (A), a neutralized (meth)acrylic acid unit (B) and an ethylene unit (C), a total amount of the unit (A) and the unit (B) is 6 to 10mol% based on all monomeric units constituting the crude ionomer resin, and a porosity of the particulate is 60% or more.

2. The method according to claim 1, wherein the cooling of the extruded mixture is performed by bringing the extruded mixture into contact with a poor solvent.

3. The method according to claim 1 or 2, wherein pores of the particulate has a median diameter of 0.05 to 1.2 µm.

4. The method according to any one of claims 1 to 3, wherein the particulate is a pellet having a size of 1 to 8 mm.

5. The method according to any one of claims 1 to 4, wherein the crude ionomer resin further comprises a (meth)acrylic acid ester unit (D); and wherein a total amount of the unit (A), the unit (B) and the unit (D) is from 6 to 10mol% based on all monomeric units constituting the crude ionomer resin.

6. The method according to any one of claims 2 to 5, wherein the poor solvent is water, an alcohol, or a mixed solvent thereof.

7. The method according to any one of claims 1 to 6, the method further comprising a step of washing the obtained porous particulate with a washing liquid.

8. The method according to claim 7, wherein the washing liquid is water, an alcohol, or a mixed solution thereof.

9. The method according to any one of claims 1 to 8, wherein the amount of a salt of a strong acid and a strong base in the ionomer resin particulate is 1000 mg/kg or less.

10. The method according to any one of claims 1 to 9, wherein an ethylene-(meth)acrylic acid ester copolymer (X) is used as a raw material.

11. A porous ionomer resin particulate having a porosity of 60% or more.

12. The porous ionomer resin particulate according to claim 11, wherein the particulate is a pellet having a size of 1 to 8 mm.

13. The porous ionomer resin particulate according to claim 11 or 12, wherein pores of the particulate have a median diameter of 0.05 to 1.2 µm.

14. The porous ionomer resin particulate according to any one of claims 11 to 13, wherein an amount of a salt of a strong acid and a strong base is 1000 mg/kg or less.

15. A resin sheet comprising one or more layers containing the porous ionomer resin particulate according to any one of claims 11 to 14 as a resin component.

16. A laminated glass interlayer comprising the resin sheet according to claim 15.

17. A laminated glass comprising two glass plates and the laminated glass interlayer according to claim 16, positioned between the two glass plates.
